# FASCICULE DE BREVET EUROPEEN

(11) **EP 1 827 903 B1**
(45) Date de publication et mention de la délivrance du brevet: **27.05.2009**
(21) Numéro de dépôt: 05824587.9
(22) Date de dépôt: 06.12.2005
(51) Int. Cl.: B60P 1/64

(54) **REMORQUE DE TRANSPORT SUSCEPTIBLE D'ETRE CHARGE ET DECHARGE AU MOYEN D'UN CAMION EQUIPE D'UN BRAS DE PREHENSION**
TRANSPORTANHÄNGER, DER MITTELS EINES MIT EINEM GREIFARM VERSEHENEN LASTWAGENS BE- UND ENTLADEN WERDEN KANN
TRANSPORT TRAILER CAPABLE OF BEING LOADED AND UNLOADED BY MEANS OF A TRUCK EQUIPPED WITH A GRIPPING ARM

(30) Priorité: 06.12.2004 FR 0412954
(43) Date de publication de la demande: 05.09.2007
(73) Titulaire: Soframe, 67980 Hangenbieten (FR)
(72) Inventeur: DONNARD, René, 67980 HANGENBIETEN (FR); MORIZOT, Frédéric, F-67980 HANGENBIETEN (FR); MOREL, Hervé, F-67980 HANGENBIETEN (FR)
(74) Mandataire: Metz, Paul
(86) Numéro de dépôt international: PCT/FR2005/003056
(87) Numéro de publication internationale: WO 2006/061509

(56) Documents cités:
- DE-A1- 2 332 849
- GB-A- 1 031 603
- US-A- 4 915 567

## Description

La présente invention concerne une remorque selon le préambule de la revendication 1, destinée à transporter une structure porteuse du type charge routière telle que par exemple, un conteneur ou un plateau déposable. Une remorque de ce type est divulguée dans US 4915567 A.

Elle concerne également un procédé de chargement et de déchargement d'une telle charge routière sur ou à partir d'une remorque de ce type et à partir ou vers un camion équipé d'un bras articulé de préhension et de manutention de charges.

Dans l'art antérieur, de nombreux systèmes de chargement et de déchargement d'un conteneur ou d'un plateau déposable portant une charge sur ou à partir d'un camion ont été décrits. Classiquement, le chargement s'effectue à l'aide d'un bras hydraulique articulé se trouvant sur le camion qui saisit la charge posée au sol et la hisse sur le camion, le déchargement s'effectuant en sens inverse.

Lorsque l'on souhaite augmenter la capacité de transport, le camion est attelé à une remorque susceptible de porter une charge complémentaire par exemple un deuxième conteneur, un plateau déposable ou plusieurs plateaux vides empilés les uns sur les autres. Généralement, pour ne pas augmenter inconsidérément le coût de la remorque, celle-ci n'est pas équipée de son propre système de chargement/déchargement. Le chargement/déchargement de la remorque s'effectue alors par l'intermédiaire du camion et de son bras articulé de préhension.

Pour charger un conteneur sur la remorque, celui-ci est d'abord chargé sur le camion au moyen de son bras de préhension. Puis, le camion recule jusqu'à venir se positionner devant l'extrémité avant de la remorque. Le conteneur, poussé par le bras de préhension du camion, est alors transféré sur la remorque.

Ce transfert s'effectue en levant le conteneur par son extrémité avant à l'aide du crochet du bras de préhension. Puis, en le poussant vers l'arrière du camion, on le fait reposer par son arête inférieure ou ses coins inférieurs arrière sur l'avant de la remorque et on le fait glisser ou rouler le long du châssis de celle-ci sous l'action de la force de poussée provenant du bras de préhension et de manutention porté par le camion.

Le camion s'éloigne ensuite de la remorque, charge un autre conteneur sur son propre plateau et retourne s'atteler à la remorque pour entraîner le convoi.

A l'inverse, pour procéder au déchargement, la remorque est détachée, le camion est déchargé, la charge de la remorque est transférée sur le camion, puis déchargée à son tour.

Le problème technique visé par l'invention consiste à transférer un conteneur, normalisé ISO ou non, un plateau déposable susceptible de porter une charge quelconque ou toute autre charge routière, préhensible directement ou au moyen d'une interface par un bras de préhension et de manutention et ce, d'un camion où il se trouve en position de chargement, vers et sur une remorque, puis à l'amener dans une position de chargement et de transport sur cette remorque.

Le mérite de l'invention est d'y procéder de façon simple et rapide, sans réglage préalable ou mise en disposition complexe d'alignement ou d'ajustement entre le camion, son bras de préhension et la remorque.

Dans l'art antérieur, on s'est déjà intéressé au problème du transfert des conteneurs d'un camion sur une remorque à l'aide d'un bras de préhension et de manutention porté par un camion.

Une première solution divulguée par le brevet britannique BOUGHTON n° GB 2.112.756 consiste à équiper les coins inférieurs arrière du conteneur de moyens de roulement ou d'un support temporaire équipé lui-même de moyens de roulement. Le conteneur roule par son arête inférieure arrière sur des plaques longitudinales de la remorque jusque dans sa position de transport à l'extrémité de la remorque. Là, il s'y trouve immobilisé en vue du transport.

Une autre solution est décrite dans le brevet américain ELLINGSEN n° US 4.915.567. Dans le système décrit, on utilise pour réaliser le transfert des plateaux spéciaux munis au niveau de leurs coins inférieurs arrière de patins de glissement. Pendant le chargement, ces patins glissent sur des pistes de glissement de la remorque, longitudinales et lisses, de manière à faciliter le transfert.

Ces solutions apparaissent intéressantes, mais présentent cependant de nombreux inconvénients.

Elles nécessitent toutes les deux l'utilisation de conteneurs ou de plateaux particuliers, spécialement équipés de moyens de roulement ou de patins adéquats, et ne permettent pas le chargement de conteneurs ou de plateaux déposables standards.

Par ailleurs, le guidage du conteneur ou du plateau lors de son transfert sur la remorque ne dépend que du travail du bras de préhension et de manutention. Il faut donc prendre un soin tout particulier dans les ajustements d'alignement entre le camion et la remorque.

Dans ces systèmes, il n'existe aucun moyen de compensation des erreurs et défauts d'alignement latéral ou angulaire entre le camion et la remorque. Celui-ci doit donc être réglé minutieusement par des manoeuvres longues et délicates du camion qui doit être parfaitement positionné par rapport à la remorque avant que le transfert puisse commencer.

En cas de mauvais positionnement relatif du camion et de la remorque, le transfert ne peut se réaliser correctement et le bras de manutention n'arrive pas à placer le conteneur ou le plateau en position sécurisée de transport. Il doit être rechargé sur le camion et l'alignement rectifié avant de procéder à une nouvelle tentative de transfert.

En outre, ces techniques sont peu exploitables dans le cas de remorques à châssis bas ou de différence importante de hauteur entre le camion et la remorque, par exemple en cas de- sol inégal. En effet, l'inclinaison du conteneur a ses limites, celle du bras également. De plus, la majorité des conteneurs et plateaux déposables, en tout cas ceux normalisés, ne sont pas construits pour se trouver en situation de porte-à-faux, mais au contraire doivent toujours être portés par leurs pièces de coin. Celles-ci, bien entendu, se trouvent aux coins, notamment ceux inférieurs du conteneur.

Ces opérations préalables de positionnement et de réglage d'alignement sont longues et particulièrement délicates pour l'opérateur, ce qui représente un inconvénient majeur de ces systèmes.

Pour résoudre ce problème technique l'invention fournit une remorque routière destinée au transport d'une charge notamment routière, par exemple un conteneur ou un plateau déposable, susceptible d'être chargée et déchargée respectivement sur ou de la remorque à partir d'un ou vers un camion équipé d'un bras de préhension et de manutention des charges.

Cette remorque comporte un châssis répondant à la réglementation routière et comprenant deux longerons s'étendant longitudinalement sur toute la longueur de la remorque. Elle est équipée d'une traverse mobile de transfert posée transversalement sur la face supérieure de la remorque et destinée à recevoir en appui l'extrémité arrière de la charge routière et à se déplacer avec cette charge dans les deux sens le long des longerons de cette remorque sous l'action du bras de manutention du camion agissant sur cette charge.

Selon l'invention, les longerons et la partie supérieure de la remorque, ainsi que la partie inférieure de la traverse mobile de transfert sont agencés et/ou conformés et disposés de manière à créer entre eux, lorsque la traverse mobile de transfert se trouve dans la partie avant de la remorque, un jeu de réglage autorisant un déplacement latéral et/ou angulaire d'ajustement de la traverse mobile de transfert par rapport à l'axe longitudinal de la remorque afin de pouvoir compenser un écart d'alignement entre le camion et la remorque lors du transfert.

Ce jeu de réglage diminue progressivement lorsque la traverse mobile de transfert se déplace vers l'arrière de la remorque, provoquant ainsi un recentrage latéral et angulaire de la traverse mobile de transfert par rapport à l'axe longitudinal de la remorque.

Avantageusement, cette remorque est utilisable indifféremment pour le chargement/déchargement et le transport d'un conteneur, d'un plateau déposable, ou de toute charge routière utile compatible avec le bras hydraulique du camion et possédant les interfaces appropriées.

L'invention enseigne également un procédé de chargement d'une charge notamment routière, par exemple un conteneur ou un plateau déposable, sur une remorque de ce type à partir d'un camion équipé d'un bras de préhension et de manutention des charges, cette remorque étant équipée d'organes de sécurité et de maintien permettant d'immobiliser la charge sur la remorque et d'une traverse mobile de transfert posée transversalement sur la face supérieure de la remorque, destinée à recevoir en appui l'extrémité arrière de la charge au moyen d'une interface de chargement et à se déplacer le long des longerons de la remorque sous l'action du bras de manutention du camion entre une traverse fixe d'extrémité avant et une traverse de butée arrière.

Ce procédé comporte les étapes suivantes :
- on immobilise la remorque par ses freins et on abaisse son timon ;
- on aligne le camion dans le prolongement de la remorque et on recule le camion jusqu'à une distance adaptée pour le chargement de la charge sur le camion à l'aide du bras de préhension en utilisant éventuellement comme repère le butoir avant de la remorque si elle en est équipée ;
- on règle la position de la traverse de butée arrière en fonction de la longueur de la charge à transférer ;
- on recule la charge à l'aide du bras de manutention du camion ;
- on ajuste la position latérale et angulaire et éventuellement la hauteur de la traverse mobile de transfert par rapport à l'extrémité arrière de la charge ;
- on place l'extrémité arrière de la charge sur la traverse mobile de transfert en utilisant l'interface de chargement de celle-ci ;
- on verrouille des verrous tournants dans les pièces inférieures de coin d'un conteneur ISO ;
- on transfère la charge en appui sur la traverse mobile de transfert vers la partie arrière de la remorque au moyen du bras de manutention du camion jusqu'au contact de butée de la traverse mobile de transfert contre la traverse de butée arrière, provoquant ainsi un recentrage latéral et angulaire de la traverse mobile de transfert par rapport à l'axe longitudinal de la remorque ;
- on verrouille la traverse mobile de transfert à l'arrière de la remorque ;
- on verrouille la charge sur la remorque au moyen des organes de sécurité et de maintien.

D'autres caractéristiques et avantages de l'invention apparaîtront à la lecture de la description exemplaire détaillée qui va suivre, description faite en référence aux dessins annexés, dans lesquels :
- les figures 1 à 4 sont des vues schématiques de profil illustrant successivement différentes étapes du transfert d'un plateau déposable d'un camion vers une remorque selon l'invention ;
- la figure 5 est une vue d'ensemble en perspective du châssis d'une remorque selon l'invention ;
- la figure 6 est une vue de dessus du châssis d'une remorque selon l'invention ;
- la figure 7 est une vue de côté du châssis d'une remorque selon l'invention ;
- la figure 8 est une vue d'ensemble en perspective du châssis d'une remorque selon l'invention équipée entre autre d'une traverse mobile de transfert qui a été représentée en demi longueur coupée transversalement ;
- la figure 9 est un agrandissement de la vue en perspective de la figure précédente correspondant à la partie avant de la remorque selon l'invention équipée de la traverse mobile de transfert représentée coupée transversalement en partie médiane ;
- la figure 10 est une vue en perspective de l'arrière d'une traverse mobile de transfert représentée seule et selon une première variante ;
- la figure 11 est une vue en perspective de l'avant d'une traverse mobile de transfert seule et selon une première variante ;
- la figure 12 est une vue en perspective de l'avant d'une traverse mobile de transfert seule et selon une première variante, les parties supérieure et inférieure de celle-ci se trouvant à l'état dissocié ;
- la figure 13 est une vue en perspective de l'arrière d'une demi traverse mobile de transfert seule, coupée transversalement en partie médiane et correspondant à cette première variante ;
- la figure 14 est une vue en perspective de l'avant d'une traverse mobile de transfert seule selon la première variante, supportant un conteneur ISO en position de transfert ;
- la figure 15 est une vue en perspective de la partie avant d'une remorque selon l'invention supportant un plateau déposable en position de transfert, vus de l'arrière ;
- la figure 16 est une vue en perspective de la partie avant d'une remorque selon l'invention supportant un plateau déposable en position de transfert, vus de l'avant ;
- la figure 17 est une vue de côté d'une traverse mobile de transfert selon la première variante, supportant un plateau déposable en position de transfert ;
- la figure 18 est une vue en coupe longitudinale, selon le plan de coupe XVIII-XVIII de la figure 17, d'une traverse mobile de transfert selon la première variante supportant un plateau déposable en position de transfert ;
- la figure 19 est une vue en coupe transversale, selon le plan de coupe XIX-XIX de la figure 18, d'une traverse mobile de transfert selon la première variante supportant un plateau déposable en position de transfert ;
- la figure 20 est une vue de l'arrière en perspective d'une traverse mobile de transfert seule et selon une deuxième variante ;
- la figure 21 est une vue de l'avant en perspective d'une traverse mobile de transfert seule et selon une deuxième variante ;
- la figure 22 est une vue de l'arrière en perspective d'une traverse mobile de transfert seule et selon une troisième variante ;
- la figure 23 est une vue de l'avant en perspective d'une traverse mobile de transfert seule et selon une troisième variante ;
- la figure 24 est une vue en perspective de la partie arrière d'une remorque selon l'invention illustrant plus particulièrement une première variante de traverse de butée arrière ;
- la figure 25 est une vue en perspective de la partie arrière d'une remorque selon l'invention dont la moitié longitudinale gauche à été enlevée, illustrant plus particulièrement une deuxième variante de traverse de butée arrière ;
- la figure 26 est une vue de dessus correspondant à la figure 25 ;
- la figure 27 est une vue en coupe longitudinale, selon le plan de coupe XXVII-XXVII de la figure 26, de la partie arrière d'une remorque équipée d'une traverse de butée arrière selon la deuxième variante ;
- la figure 28 est une vue en perspective d'une remorque selon l'invention dont la moitié longitudinale gauche à été enlevée, illustrant plus particulièrement une troisième variante de traverse de butée arrière à positionnement automatique ;
- les figures 29 à 31 sont des vues de profil schématiques illustrant les définitions des longueurs L1, L2 et C1, C2 et les positions des traverses respectivement mobile de transfert et de butée arrière pour le transfert d'un plateau déposable d'un camion vers une remorque selon l'invention, cette remorque étant équipée d'une traverse de butée arrière à positionnement automatique ;
- les figures 32 à 34 sont des vues en perspective d'une remorque selon l'invention dont la moitié longitudinale gauche a été enlevée, illustrant successivement différentes étapes du chargement d'une charge routière non représentée sur une remorque équipée d'une traverse de butée arrière à positionnement automatique ;
- la figure 35 est une vue en perspective de la partie arrière d'une remorque selon l'invention supportant un plateau déposable en fin de transfert, la partie haute de la traverse mobile de transfert n'ayant pas été abaissée et rendant impossible son verrouillage contre la traverse de butée arrière ;
- la figure 36 est une vue en perspective de la partie arrière d'une remorque selon l'invention supportant un plateau déposable en position finale de transfert, la traverse mobile de transfert étant verrouillée contre la traverse de butée arrière ;
- la figure 37 est une vue de côté en perspective d'une remorque selon l'invention au niveau d'un centreur escamotable en position redressée ;
- la figure 38 est une vue en perspective d'une remorque selon l'invention au niveau d'un centreur escamotable en position basculée de verrouillage, bloquant la traverse mobile de transfert pour un déplacement à vide de la remorque ;
- les figures 39 à 41 sont des vues en perspective d'une remorque selon l'invention au niveau d'un centreur escamotable lors du déplacement vers l'arrière de la traverse mobile de transfert pendant le processus de chargement, ces figures illustrant successivement :
   - pour la figure 39, le centreur escamotable en position redressée, la traverse mobile de transfert n'étant pas encore arrivée à son niveau ;
   - pour la figure 40, le basculement du centreur escamotable provoqué par la poussée de la traverse mobile de transfert ;
   - pour la figure 41, le centreur escamotable en position escamotée et verrouillée après le passage de la traverse mobile de transfert ;

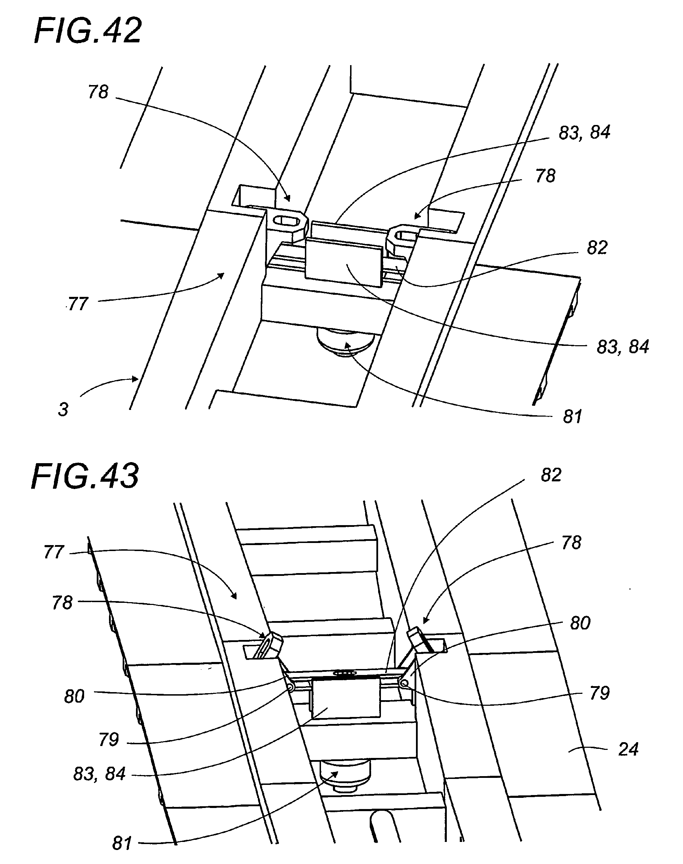

- la figure 42 est une vue en perspective de la partie centrale d'une remorque selon l'invention illustrant plus particulièrement le mécanisme de verrouillage des doigts DIN normalisés des plateaux déposables, en position escamotée ;
- la figure 43 est une vue en perspective de la partie centrale d'une remorque selon l'invention illustrant plus particulièrement le mécanisme de verrouillage des doigts DIN normalisés des plateaux déposables, en cours de déploiement ;

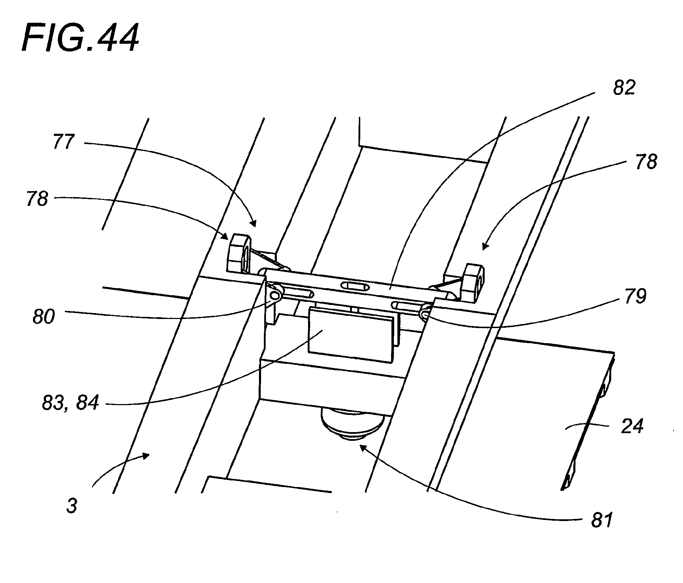

- la figure 44 est une vue en perspective de la partie centrale d'une remorque selon l'invention illustrant plus particulièrement le mécanisme de verrouillage des doigts DIN normalisés des plateaux déposables, en position déployée de verrouillage.

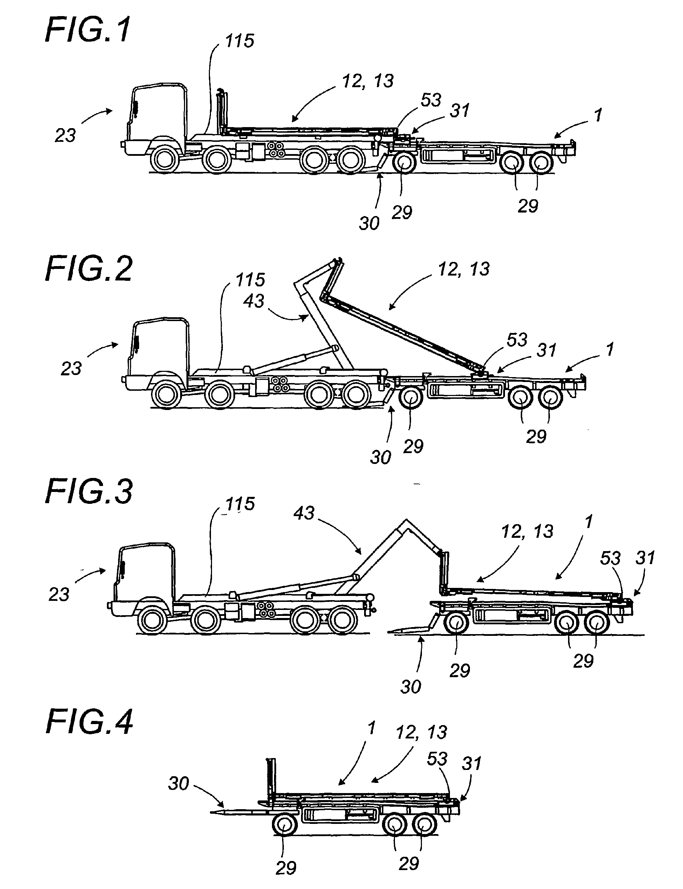

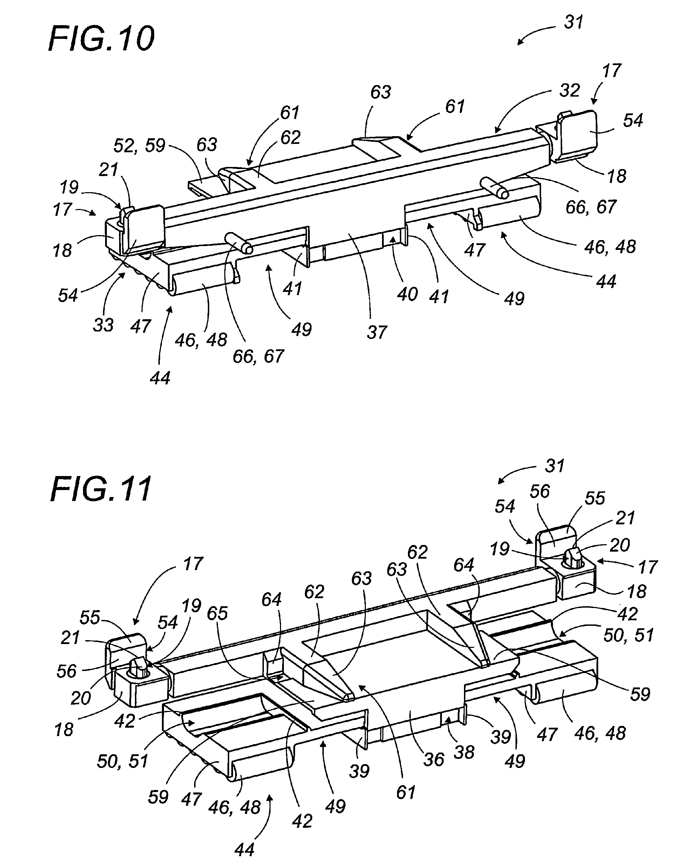

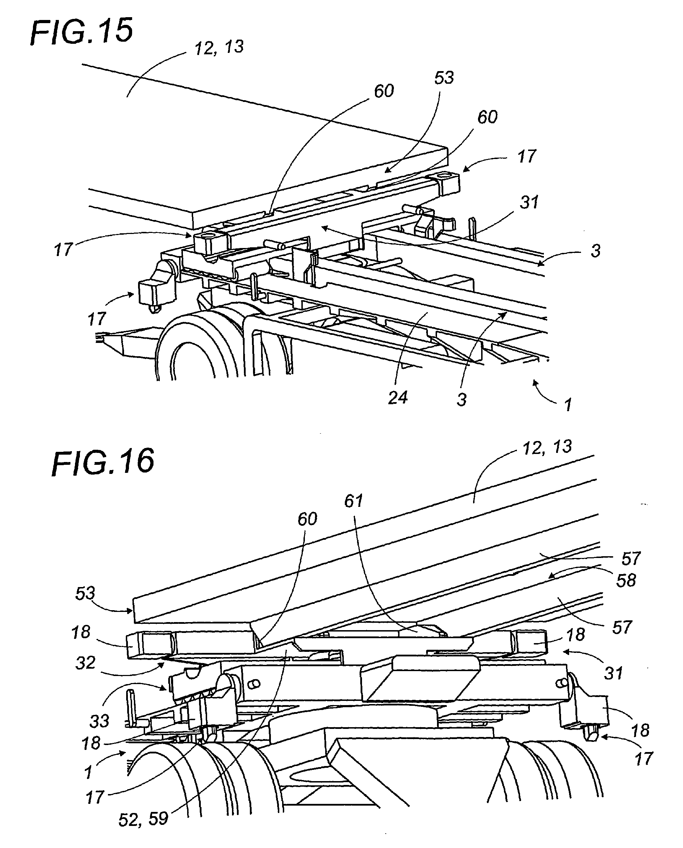

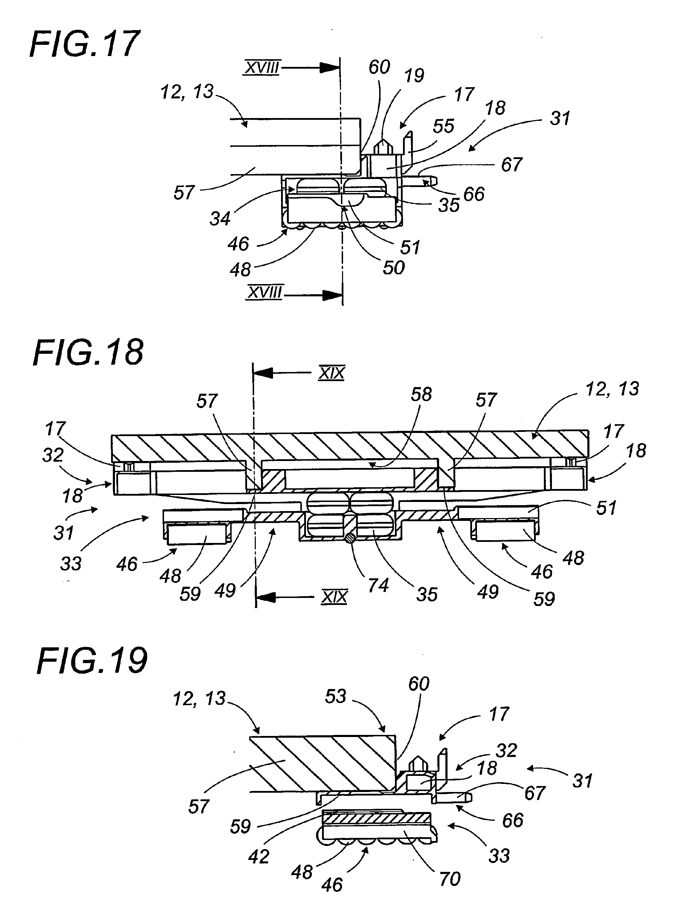

La remorque selon la présente invention va maintenant être décrite de façon détaillée en référence aux figures 1 à 44. Les éléments équivalents représentés sur les différentes figures porteront les mêmes références numériques.

Par convention dans cette description, on désignera par avant le côté de la remorque dirigé vers le camion et par arrière le côté opposé.

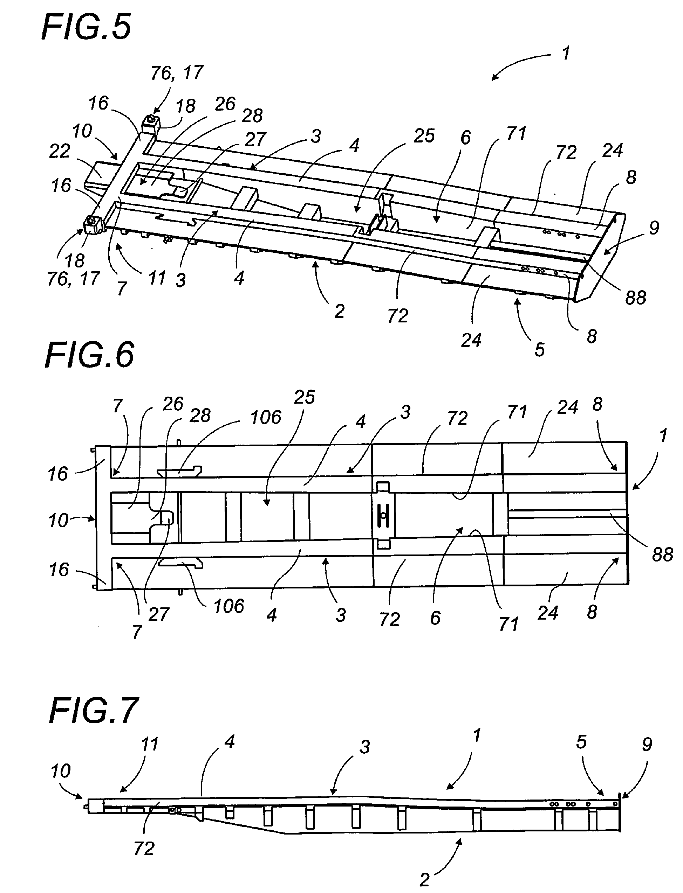

L'invention concerne principalement une remorque 1 dont on décrira d'abord la conformation générale en faisant plus particulièrement référence aux figures 5 à 7.

La remorque 1 se compose classiquement d'un châssis 2 répondant à la réglementation routière et comportant au moins un, de préférence deux longerons tels que 3 s'étendant longitudinalement sur toute la longueur de la remorque 1.

Ces longerons 3, de forme de section par exemple rectangulaire et à paroi supérieure 4 sensiblement plane, ne sont de préférence pas parallèles sur toute leur longueur, mais convergent l'un vers l'autre dans la partie arrière 5 de la remorque 1 de manière à délimiter entre eux une convergence de centrage 6 dont la fonction sera explicitée par la suite.

Les longerons 3 ne sont pas non plus horizontaux sur toute leur longueur, mais descendent dans la partie arrière 5 de la remorque, créant ainsi une dénivellation entre leur extrémité avant 7 et leur extrémité arrière 8 comme on le voit clairement sur la figure 7.

Ces longerons 3 se terminent à l'arrière au niveau d'une paroi terminale arrière 9, qui ferme l'extrémité arrière de la remorque 1 et s'élève de préférence sensiblement verticalement jusqu'au dessus de la paroi supérieure 4 de l'extrémité arrière 8 des longerons 3.

A l'avant, ces longerons 3 sont réunis par une traverse fixe d'extrémité avant 10, par exemple également de section rectangulaire, s'étendant transversalement à la remorque 1 dans la partie avant 11 de celle-ci.

Avantageusement, la remorque 1 selon l'invention peut permettre de reprendre et de transporter une structure porteuse ou plus généralement une charge 12 quel que soit son type. Par exemple, elle permet grâce à l'interface multiple de sa traverse de reprendre et de transporter une charge quelconque notamment dans la limite du respect des normes STANAG 2413 et DIN 30722 dans le cas, pris comme exemple, d'un plateau déposable 13 et dans la limite de la norme ISO 668 dans le cas d'un conteneur normalisé 14, également pris comme exemple.

Les conteneurs normalisés 14 et certains plateaux déposables 13 sont équipés en partie basse de pièces de coin normalisées 15, appelées coins ISO, conçues pour permettre la préhension, la manutention et le verrouillage, par leur seul intermédiaire, du conteneur ou du plateau concerné.

Pour verrouiller ce type de charge 12 une fois son transfert effectué, la traverse fixe d'extrémité avant 10 comporte de préférence à chacune de ses extrémités 16, un verrou de coin 17, préférentiellement un verrou tournant, positionné et réalisé de manière appropriée pour coopérer avec les pièces de coin normalisées 15 équipant les coins inférieurs de l'extrémité avant de la charge 12 et réaliser ainsi leur verrouillage.

Ces verrous de coin 17 sont de préférence montés chacun sur, ou intégrés à, un bloc pivotant ou amovible 18 de manière à pouvoir être basculés en position escamotée lorsqu'ils ne sont pas nécessaires, pour ne pas gêner le transfert et le verrouillage de charges 12 non équipées de pièces de coin 15.

Les verrous de coin 17 peuvent comprendre en outre un doigt pivotant de centrage 19 de forme générale oblongue, en saillie vers le haut par une extrémité 20 comportant des versants divergeant vers le bas, bombés ou plans qui peuvent se rejoindre comme représenté, selon une arête commune 21. Ces doigts de centrage 19 permettent un léger recentrage du conteneur 14 ou du plateau 13 à l'approche des points de verrouillage.

Avantageusement, la remorque 1 selon l'invention peut comporter également un butoir avant 22 faisant saillie à l'avant de la remorque 1 et dont la longueur est calculée pour représenter l'espacement optimal à respecter entre le camion 23 et la remorque 1 afin d'effectuer un transfert de la charge 12 dans de bonnes conditions.

Ce butoir 22 constitue un repère pour le conducteur du camion 23 qui doit reculer celui-ci en direction de la remorque 1 avant de débuter les opérations de transfert. Lorsque l'arrière du camion 23 vient en contact avec le butoir 22, le conducteur sait que l'espacement nécessaire est respecté et peut ainsi terminer sa manoeuvre.

La remorque 1 selon l'invention peut comporter en outre des pistes de transfert 24, prévues longitudinalement de chaque côté de la remorque 1 et qui de préférence, bordent le côté extérieur des longerons 3 de la remorque 1 en restant sensiblement parallèles à la paroi supérieure 4 de ceux-ci. Ces pistes de transfert 24 suivent ainsi la pente descendante des longerons 3 au niveau de la partie arrière 5 de la remorque 1.

Du côté intérieur des longerons 3, les structures constitutives du châssis 2 de la remorque 1 sont en retrait vers le bas formant ainsi entre les longerons 3 un espace central creux 25.

Dans la partie avant 11 de la remorque 1, une surface plane 26 sensiblement horizontale occupe préférentiellement l'avant de cet espace creux 25, à un niveau inférieur à celui de la paroi supérieure 4 des longerons 3. Cette surface plane 26 débute préférentiellement par une rampe descendante 27 vers l'arrière de la remorque et joue le rôle de plan d'appui 28 procurant une assistance à la correction d'alignement comme on le verra par la suite.

La remorque 1 selon l'invention comporte également de nombreux autres éléments nécessaires à son fonctionnement, tels que par exemple des roues 29 et un timon 30 permettant de l'atteler au camion 23. Bien que présents, ces éléments classiques et connus de l'homme du métier, ne seront pas décrits dans cette demande.

La remorque 1 selon l'invention est, selon une caractéristique essentielle de l'invention, équipée d'une traverse mobile de transfert 31.

La traverse mobile de transfert 31 est un corps allongé de forme générale parallélépipédique, destiné à être posé transversalement sur la face supérieure du châssis 2 de la remorque 1.

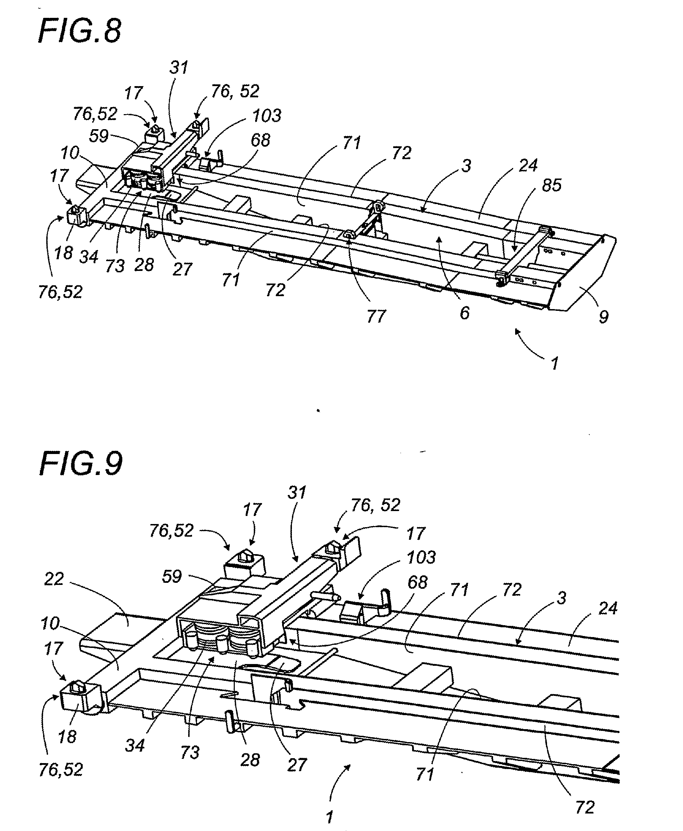

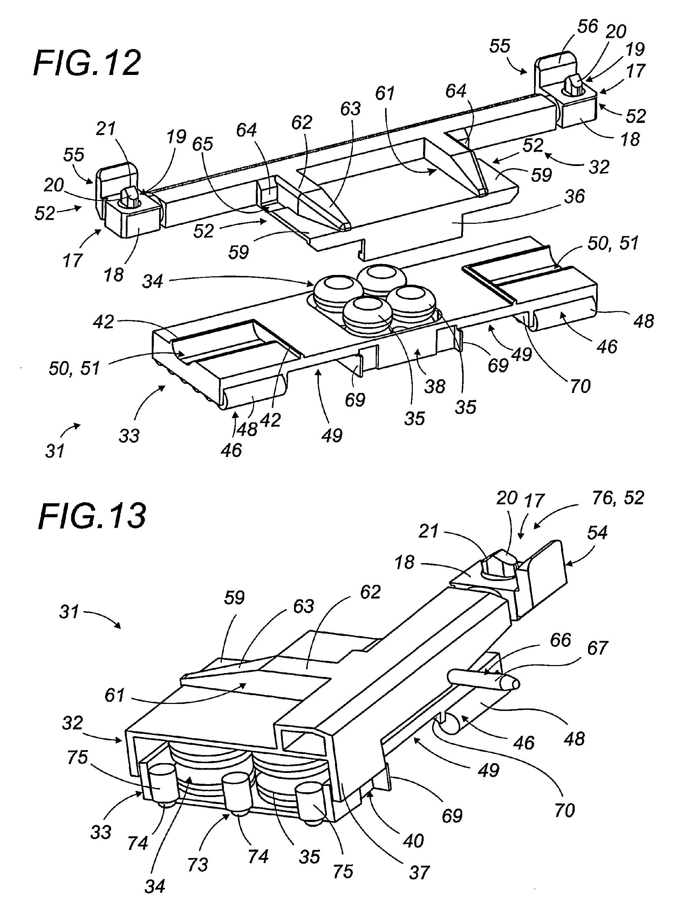

Selon une variante préférentielle représentée sur les figures 8 à 19 et 32 à 41, la traverse mobile de transfert 31 se compose de deux parties distinctes : une traverse haute 32 et une traverse basse 33, représentées dissociées sur la figure 12. Ces deux parties se trouvent superposées en fonctionnement.

La traverse haute 32 et la traverse basse 33 sont reliées par un moyen d'élévation 34, intercalé entre les deux parties de la traverse, qui permet de modifier la position verticale de la traverse haute 32 par rapport à la traverse basse 33 et donc la hauteur totale de la traverse mobile de transfert 31 dans la limite de la course autorisée par le moyen d'élévation 34.

Ce moyen d'élévation 34 consiste de préférence, en un ensemble de soufflets pneumatiques 35 par exemple avec valve, au nombre de quatre soufflets identiques sur la variante représentée. Le moyen d'élévation 34 peut, dans sa forme la plus simple, être commandé manuellement. Cependant, son automatisation peut parfaitement être envisagée.

Avantageusement, le moyen d'élévation 34 permet une variation de préférence continue de la hauteur de la traverse haute 32 et le maintien de celle-ci à une hauteur quelconque comprise dans sa course totale. Il est ainsi possible de modifier la hauteur de l'interface de chargement par rapport au plan défini par la paroi supérieure 4 des longerons 3 de la remorque 1. Le but d'un tel réglage de hauteur sera explicité plus en détail par la suite.

Les deux parties haute 32 et basse 33 de la traverse mobile de transfert 31 sont assujetties l'une à l'autre. Le mouvement de montée ou de descente de la traverse haute 32 par rapport à la traverse basse 33 est guidé verticalement et latéralement, par exemple au moyen d'une paroi de guidage avant 36 et d'une paroi de guidage arrière 37 qui s'étendent sensiblement verticalement et vers le bas à partir de la traverse haute 32 et qui coulissent respectivement à l'avant dans deux gorges parallèles de guidage 38 bordées chacune latéralement par un rebord 39 sensiblement vertical et à l'arrière dans deux gorges de guidage 40 bordées chacune latéralement par un rebord 41 sensiblement vertical.

Les parties haute et basse de la traverse mobile de transfert ne peuvent se dissocier par la poursuite du mouvement vertical d'éloignement entre elles en raison d'une butée haute de limitation.

Le mouvement d'élévation est limité en amplitude par exemple par deux couples de rebords bas profilés en crochet vers l'intérieur dans le bord inférieur de chaque paroi de guidage avant et arrière pour jouer le rôle de butée haute.

Le moyen d'élévation 34 peut permettre sous charge une légère amplitude de variation angulaire pour le positionnement de la traverse haute 32 par l'effet d'auto-équilibrage apporté par les soufflets.

De préférence, la traverse basse 33 comporte des nervures de guidage et d'immobilisation 42 de la traverse haute 32 de manière à supprimer les jeux nécessaires au mouvement relatif des deux parties de la traverse mobile de transfert 1, lorsque le traverse haute 32 se trouve en position basse.

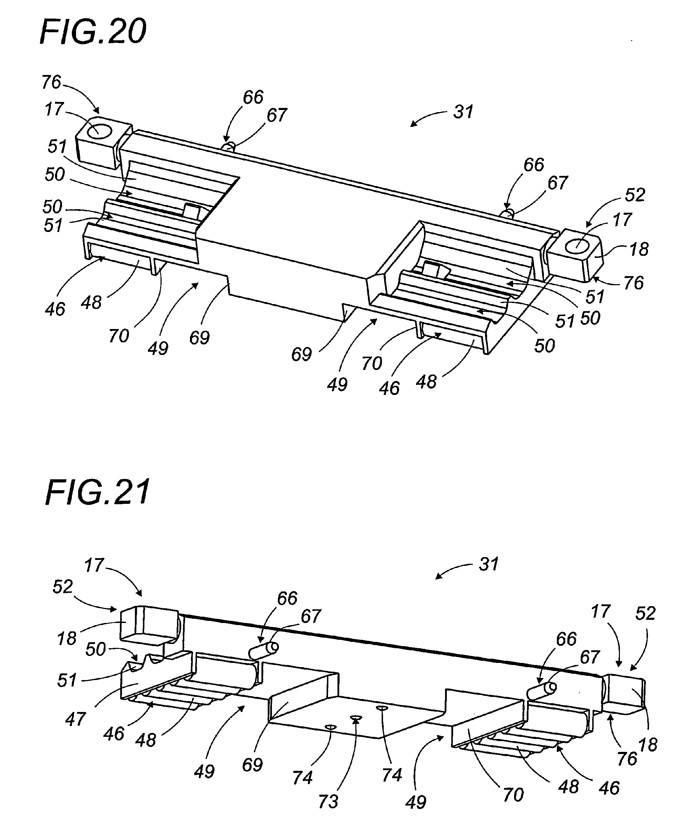

Selon d'autres modes de réalisation, la traverse mobile de transfert 31 peut aussi être réalisée plus simplement, monobloc et sans moyen d'élévation, comme par exemple dans le cas des variantes illustrées par les figures 20 à 23.

La traverse mobile de transfert 31 est destinée à être mobile et à se déplacer dans les deux sens le long des longerons 3 de la remorque 1, sous l'action du bras de préhension et de manutention 43 du camion 23 agissant sur la charge routière supportée par cette traverse.

A cette fin, elle comporte des moyens de déplacement 44 aptes à porter la traverse 31 et la charge 12 en appui sur celle-ci et permettant à la traverse mobile de transfert 31 de se déplacer sur les pistes de transfert 24 longitudinales prévues sur la remorque 1.

Ces moyens de déplacement 44 sont de préférence des moyens de roulement 46, par exemple sous la forme de supports de roulement 47 équipés d'une série de rouleaux 48 dimensionnés pour reprendre une partie de la charge.

Ces moyens de roulement 46, montés préférentiellement en sous face et de chaque côté de la traverse mobile de transfert 31, sont destinés à rouler sur les pistes longitudinales de transfert 24 prévues de préférence de chaque côté de la partie supérieure de la remorque 1.

Bien évidemment, les moyens de déplacement 44 peuvent être de nature différente. Il peut ainsi s'agir par exemple de moyens de glissement tels que des patins, de moyens de coulissement, sur coussin d'air par exemple, ou de tout autre moyen de déplacement approprié.

Lors de son déplacement le long de la remorque 1, la traverse mobile de transfert 31 est guidée transversalement au châssis 2 de la remorque. Ce guidage s'effectue de préférence au moyen de tunnels de guidage 49, ouverts vers le bas et s'étendant en sous face de la traverse basse 33. Ces tunnels de guidage 49, préférentiellement au nombre de deux, sont destinés à venir prendre appui et à coulisser sur les longerons 3 du châssis 2 de la remorque 1 lorsque la traverse mobile de transfert 31 est montée sur la remorque 1. Ils évitent ainsi, en fin de déplacement, la mise en oblique de la traverse mobile de transfert 31 pendant ses déplacements.

Avantageusement, la traverse mobile de transfert 31 et plus particulièrement la partie basse 33 de celle-ci peut comporter de chaque côté une ou plusieurs cavité(s) de réception 50, par exemple sous la forme à chaque fois, soit d'un logement individuel 51 pour recevoir chacun des rouleaux pouvant équiper l'extrémité inférieure de certains conteneurs 14 ou plateaux déposables 13 ou plus généralement d'une charge routière 12, soit d'un logement simple ou multiple adapté au type de rouleaux de la charge routière 12 et à sa longueur.

Ces cavités de réception 50 se trouvent de préférence au-dessus du support des moyens de roulement 46, et peuvent même être directement conformées dans le support de ces moyens de roulement 46 comme sur les variantes représentées.

La traverse mobile de transfert 31 peut ainsi par exemple, comporter de chaque côté un logement 51 universel c'est-à-dire de grande taille pour pouvoir recevoir tout type de rouleaux de dimension et de position normalisées ou non, susceptibles d'équiper la charge 12. C'est par exemple le cas du premier mode de réalisation de la traverse mobile de transfert 31 illustré par les figures 8 à 19.

Dans ce cas, les logements 51 ne suffisent pas à réaliser une réelle immobilisation des rouleaux et la reprise de la charge 12, conteneur ou plateau, doit être assurée par un autre moyen comme il sera développé par la suite.

Il est également possible de réaliser un ou plusieurs logement(s) adapté(s) aux dimensions précises des rouleaux et aux longueurs des plateaux de façon à pouvoir les immobiliser et ainsi reprendre la charge 12 au moyen de ses rouleaux lorsqu'elle en est équipée en entraînant la traverse mobile de transfert dans son déplacement.

Pour cela, la traverse peut comporter de chaque côté plusieurs types de logements 51, de profondeur, de largeur et de longueur différentes en fonction des différents types de rouleaux pouvant être rencontrés, comme sur la variante des figures 20 et 21.

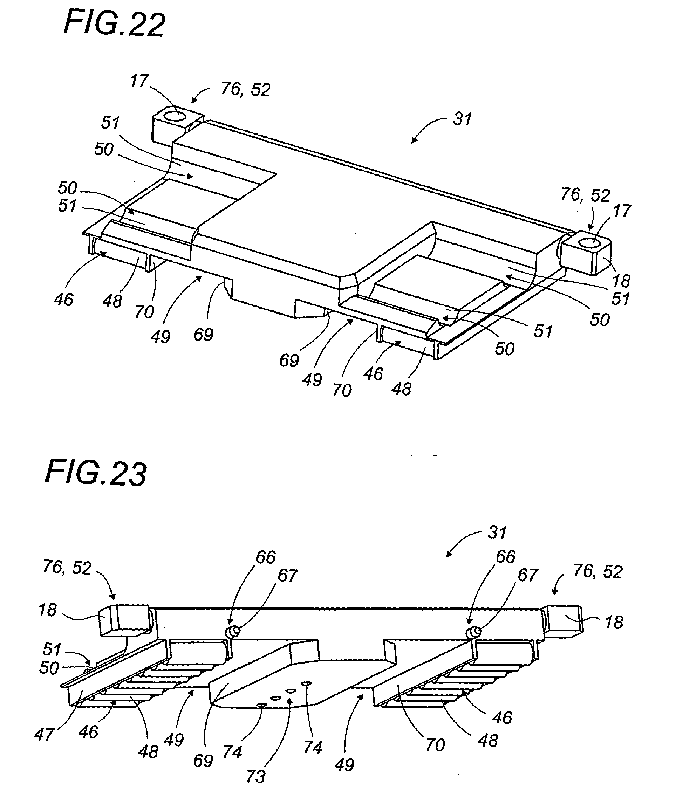

Elle peut également être conçue pour transporter toujours les mêmes conteneurs ou plateaux et ainsi correspondre à un ou plusieurs type(s) de rouleaux préalablement définis. Un ou plusieurs logement(s) 51 de dimensions et de forme appropriées seront alors ménagé(s) dans la traverse mobile de transfert 31. La variante représentée sur les figures 22 et 23, qui comporte de chaque côté deux logements 51 prédéfinis, illustre un tel cas.

La traverse mobile de transfert 31 peut avantageusement permettre de reprendre indifféremment différents types de charge routière 12. Dans ce but, la partie supérieure de la traverse mobile de transfert 31, de préférence la traverse haute 32, peut comporter différents types d'interfaces 52 nécessaires au support et à la reprise d'entraînement selon la nature de la charge routière 12.

Par différents types d'interface, il faut comprendre des interfaces propres aux conteneurs ISO, mais aussi celles propres aux plateaux déposables à rouleaux et toute autre. Il faut également comprendre que ces interfaces spécifiques peuvent se trouver simultanément pour deux d'entre elles ou pour toutes sur la même traverse mobile de transfert.

Pour reprendre les charges routières 12 équipées de pièces de coin normalisées 15, la traverse mobile de transfert 31 selon l'invention peut comporter, comme la traverse fixe d'extrémité avant 10, des verrous de coin 17, préférentiellement tournants. Ces verrous de coin 17 sont positionnés de préférence à chacune de ses extrémités, de façon à coopérer avec les pièces de coin normalisées 15 équipant les coins inférieurs de l'extrémité arrière 53 de la charge 12 et à assurer leur verrouillage.

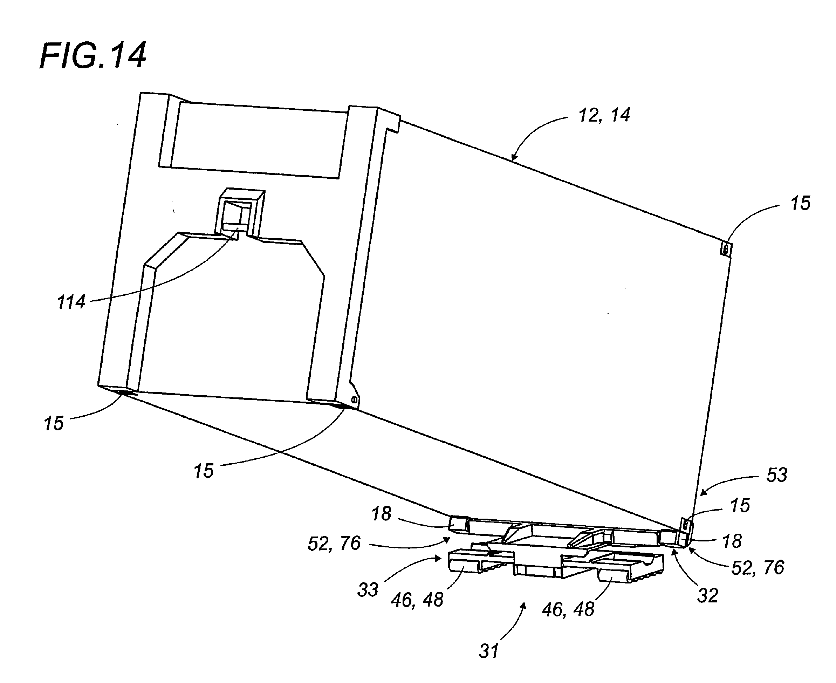

Un exemple de reprise d'un conteneur 14 muni de pièces de coin normalisées 15 par une traverse mobile de transfert 31 selon l'invention a été représenté sur la figure 14.

Les verrous de coin 17 sont intégrés à, ou montés dans ou sur, les blocs mécaniques pivotants ou amovibles 18 de manière à suivre l'inclinaison du conteneur 14 qui bascule durant la phase de chargement ou de déchargement du fait du mouvement de pivotement du bras de manutention 43 du camion 23. Cette possibilité de pivotement des verrous de coin 17 autorise le verrouillage de la charge 12 au début du processus de transfert, dès que l'extrémité arrière 53 de celle-ci vient s'appuyer sur la traverse 31.

Comme précédemment, les verrous de coin 17 peuvent comprendre en outre un doigt de centrage 19 saillant vers le haut et dont les deux faces opposées 20 sont en oblique.

Ces verrous de coin 17 peuvent également comporter un taquet de butée et de centrage 54 arrière et/ou latéral (non représenté) s'élevant sous la forme d'une paroi sensiblement verticale, respectivement à l'arrière du verrou 17 et/ou sur le côté extérieur de celui-ci, dont la partie supérieure présente un plan incliné 55 en direction du verrou 17 pour former une rampe de recentrage avec une face de calage 56.

Les plateaux déposables 13 ne possèdent pas tous des pièces de coin normalisées 15 ou des rouleaux, mais peuvent présenter des longerons 57 normalisés en position et en écartement définissant entre eux un tunnel 58.

Les plateaux déposables 13 peuvent être supportés au moyen de deux plans jumeaux de chargement 59 s'étendant sur une zone correspondant à l'emplacement normalisé des longerons 57 de manière à pouvoir réceptionner et supporter l'extrémité arrière 60 des sous faces de ceux-ci lorsque le bras de manutention 43 du camion 23 pousse le plateau déposable 13 vers la remorque 1.

Pour que la mise en place de l'extrémité arrière 60 des longerons 57 du plateau 13 s'effectue correctement, la traverse peut comporter également au moins un, mais de préférence deux ou des centreurs de chargement 61 par exemple sous la forme de deux barres longitudinales 62, pénétrant à l'intérieur du tunnel 58 de manière à bloquer latéralement les longerons 57. Chacune de ces barres longitudinales 62 se termine de préférence par une extrémité en pointe 63 constituant une rampe inclinée de guidage pour l'intérieur des longerons 57 jusqu'à ce que le plateau déposable 13 arrive en position de transfert, position dans laquelle l'extrémité arrière 60 de chacun des longerons 57 vient de préférence rencontrer une butée arrière 64.

Avantageusement, cette butée arrière 64 peut être précédée d'un moyen de retenue de la traverse mobile de transfert par le plateau déposable 13 par exemple sous la forme d'une encoche 65, ménagée dans chaque plan de chargement 59, permettant de garder dégagée l'extrémité arrière du plateau déposable 13 lorsque celui-ci se trouve en position inclinée de déchargement afin d'éviter que le plateau 13 puisse s'échapper de la traverse mobile de transfert 31. Ceci permet au déchargement d'entraîner la traverse vers l'avant de la remorque.

La traverse mobile de transfert 31 peut comporter une ou plusieurs interfaces de chargement 52 telles que décrites ci-dessus, selon qu'elle est universelle ou destinée exclusivement à un type de charges routières 12. De même, ces interfaces 52 sont situées sur la traverse haute 32 lorsque la traverse mobile de transfert 31 est réalisée en deux parties.

Afin d'immobiliser la traverse mobile de transfert 31 à l'état vide ou chargé, lorsque la remorque 1 roule, la traverse mobile de transfert 31 comporte préférentiellement un moyen de blocage 66, par exemple sous la forme de deux doigts de verrouillage 67 s'étendant à l'arrière de la traverse mobile de transfert 31, destinés à coopérer avec un dispositif de verrouillage complémentaire situé à un endroit approprié de la remorque 1.

Selon une caractéristique essentielle de l'invention, les longerons 3 et la partie supérieure de la remorque 1, ainsi que la partie inférieure de la traverse mobile de transfert 31 sont conformés et disposés de manière à créer entre eux, lorsque la traverse mobile de transfert 31 se trouve dans la partie avant 11 de la remorque 1, un jeu de réglage 68 autorisant un déplacement latéral et/ou angulaire d'ajustement de la traverse mobile de transfert 31 par rapport à l'axe longitudinal de la remorque 1 afin de pouvoir compenser un écart d'alignement entre le camion 23 et la remorque 1 lors du transfert.

En effet, lorsque la traverse mobile de transfert 31 se trouve dans la partie avant 11 de la remorque, il existe un jeu 68 (figure 9) entre les parois latérales, respectivement intérieures 69 et extérieures 70, des tunnels de guidages 49 de la traverse mobile de transfert 31 et les parois latérales, respectivement intérieures 71 et extérieures 72, en regard des longerons 3 de la remorque 1.

Ce jeu 68 autorise un certain débattement latéral et/ou angulaire de la traverse mobile de transfert 31 par rapport à la remorque 1 lorsqu'elle se trouve dans la partie avant 11 de la remorque.

L'opérateur peut ainsi avantageusement optimiser le positionnement et l'orientation de la traverse mobile de transfert 31 par rapport à l'extrémité arrière 53 de la charge 12, afin de corriger les défauts d'alignement entre la remorque 1 et le camion 23. Grâce à ce jeu de réglage 68, la position des interfaces de chargement 52 de la traverse mobile de transfert 31 peut être ajustée pour qu'elles se trouvent juste en dessous des zones correspondantes de la charge 12.

Selon un mode de réalisation préférentiel, la traverse mobile de transfert 31 peut comporter en outre un moyen d'assistance au réglage 73. Ce moyen d'assistance 73, situé en sous face de la traverse mobile de transfert 31, préférentiellement en partie centrale de cette sous face, est formé par exemple d'une surface de contact et d'appui multidirectionnel, réalisée par exemple au moyen d'une série de contacts d'appui hémisphériques, de préférence des billes 74 montées en déplacement libre sur elles-mêmes et en déplacement d'enfoncement dans un logement 75, par exemple cylindrique.

Avantageusement, les billes 74 sont reliées à la partie basse de la traverse mobile de transfert 31, préférentiellement à la traverse basse 33, par l'intermédiaire de ressorts de compression conférant ainsi aux billes 74 un caractère effaçable sous compression avec rappel en position sortie.

Le dimensionnement et le nombre de ces billes 74 et de leurs ressorts de compression (non représentés) sont calculés afin de compenser la masse de la traverse mobile de transfert 31 à l'état libre et non chargé.

Lorsque la traverse mobile de transfert 31 est dans la partie avant 11 de la remorque, les billes 74 se retrouvent au niveau de la surface plane 26 qui forme pour celles-ci un plan d'appui 28 permettant une assistance à la correction de l'alignement.

Au cours des déplacements de la traverse mobile de transfert 31 lors des manoeuvres de chargement ou de déchargement, la montée des billes 74 sur le plan d'appui 28 ou leur descente hors de celui-ci est facilitée par la présence de la rampe ascendante 27 qui les rend progressives.

Le contact des billes 74 ainsi dimensionnées sur ce plan d'appui 28, conduit à surélever légèrement la traverse mobile de transfert 31 non chargée, supprimant en cas de situation d'équilibre, le contact des moyens de déplacement 44 de la traverse 31 sur les pistes de transfert 24 de la remorque 1.

Le réglage de la position relative de la traverse mobile de transfert 31 et en particulier de son interface de chargement 52, par rapport à la charge 12 peut alors s'effectuer aisément et manuellement en faisant simplement rouler les billes 74 sur le plan d'appui 28.

Un léger mouvement de roulis de la traverse mobile de transfert 31 est également possible, ce qui facilite au besoin la manoeuvre de verrouillage des conteneurs 14 ou plateaux déposables 13 munis de pièces de coin normalisées 15.

Lors de la réception de la charge 12 par la traverse mobile de transfert 31, les ressorts des billes 74, sous dimensionnés par rapport au poids de la charge 12, provoquent l'effacement des billes 74.

La charge est alors supportée par les moyens de déplacement 44 qui se retrouvent en contact avec les pistes de transfert 24 de la remorque 1. Le transfert peut alors avoir lieu normalement le long de la remorque 1.

Lors de son déplacement vers la partie arrière 5 de la remorque 1, la traverse mobile de transfert 31 est guidée par les longerons 3 de la remorque.

Comme décrit précédemment, ceux-ci convergent progressivement l'un vers l'autre dans la partie arrière 5 de la remorque formant entre eux une convergence 6 de centrage et d'auto-alignement sur l'axe longitudinal de la remorque. Lorsque la traverse mobile de transfert 31 arrive à ce niveau, le jeu 68 existant entre les parois latérales des tunnels de guidage 49 de la traverse mobile de transfert 31 et les parois latérales en regard des longerons 3 de la remorque 1, diminue progressivement jusqu'à disparaître dans la position finale occupée par la traverse mobile de transfert 31 dans la zone d'extrémité arrière de la remorque.

Les parois latérales intérieures 71 des longerons 3 de la remorque constituent ainsi des rampes progressives de contact et d'appui pour les parois latérales intérieures 69 des tunnels de guidage 49. Elles obligent la traverse mobile de transfert 31 à un recentrage, latéral et angulaire par rapport à l'axe longitudinal de la remorque 1, progressif au niveau de la convergence de centrage 6.

La hauteur de la paroi supérieure 4 des longerons 3 diminuant vers l'arrière de la remorque 1, le niveau de la traverse mobile de transfert 31 s'abaisse lors de son déplacement vers l'arrière notamment en fin de course.

En position finale de transfert, la traverse 31 se retrouve donc parfaitement centrée et alignée par rapport à l'axe longitudinal de la remorque et en position abaissée par rapport à la partie avant de la remorque 11.

Dans cette position finale abaissée, la paroi supérieure de la traverse mobile de transfert 31 se trouve de préférence sensiblement au même niveau que la face supérieure de la remorque dans sa partie avant 11, constituant ainsi une surface d'appui et de support sensiblement plane pour le transport de la charge 12, notamment dans le cas de plateaux déposables.

La remorque 1 selon l'invention comporte en outre des organes de sécurité et de maintien 76 de la charge routière 12 permettant d'immobiliser et de bloquer la charge routière 12 lorsqu'elle a été chargée sur la remorque. Ces organes de sécurité et de maintien 76 réalisent un véritable verrouillage de la charge 12 en position de transport pour que le déplacement ultérieur de la remorque 1 puisse s'effectuer sans risques.

Ces organes de sécurité et de maintien 76 sont destinés à coopérer avec des moyens complémentaires équipant, ou portés par, la charge routière 12. La nature de ces moyens complémentaires dépend du type de charge routière 12 transportée. Ainsi par exemple, les conteneurs normalisés 14 et certains plateaux déposables 13 sont équipés de pièces de coin normalisées 15. De même, les plateaux déposables normalisés 13 comportent tous des doigts de verrouillage normalisés, appelés doigts DIN, faisant saillie en position médiane, à l'intérieur de leur tunnel 58.

Pour verrouiller des charges 12 équipées de pièces de coin 15, la remorque 1 selon l'invention peut comporter, comme déjà mentionné, quatre verrous de coin 17, préférentiellement des verrous tournants, disposés de manière à se retrouver en regard des quatre coins inférieurs de la charge 12 en position de transport. Pour cela, ces verrous de coin 17 sont de préférence disposés, pour deux d'entre eux, aux extrémités latérales de la traverse fixe d'extrémité avant 10, et pour les deux autres aux extrémités de la traverse mobile de transfert 31.

Pour verrouiller une charge 12 par l'intermédiaire de ses doigts DIN, la remorque 1 selon l'invention peut également comporter des organes médians de verrouillage 77, dont un mode de réalisation préférentiel a été représenté sur les figures 42 à 44.

Dans cette variante préférentielle, les deux organes médians de verrouillage 77 sont formés chacun d'un oeillet 78 qui vient entourer le doigt DIN correspondant, interdisant une fois en position tout mouvement longitudinal et vertical du plateau déposable 13.

Afin de ne pas s'opposer au passage de la traverse mobile de transfert 31 pendant les opérations de chargement ou de déchargement, ces oeillets 78 sont réalisés pivotants de manière à pouvoir passer d'une position escamotée de repos représentée sur la figure 42, dans laquelle il laisse passer librement la traverse mobile de transfert 31, dans une position déployée de verrouillage représentée sur la figure 44 et inversement. La figure 43 représente ces oeillets 78 en cours de basculement.

Pour permettre un tel basculement, chaque oeillet 78 est prolongé par un axe d'articulation 79 et un bras de levier 80 relié à un dispositif d'actionnement 81 comportant par exemple un accumulateur ou un vérin pneumatique.

Chacun des oeillets 78 peut être commandé indépendamment par un dispositif d'actionnement 81 qui lui est propre. Cependant, un dispositif d'actionnement 81 centralisé et commun aux deux oeillets 78 est préféré. Il agit alors par exemple, par l'intermédiaire d'une tige de liaison 82 réunissant les deux axes d'articulation 79 des deux oeillets en regard.

Ce dispositif d'actionnement 79 dispose préférentiellement d'une sécurité sous la forme d'un puissant ressort de rappel dont la fonction consiste à maintenir le verrouillage en cas de défaillance de la génération d'énergie.

Un dispositif manuel de secours visant à neutraliser ce ressort de rappel est préférentiellement prévu pour permettre à l'opérateur de procéder manuellement au basculement des oeillets 78 en cas de défaillance du dispositif d'actionnement 79.

Un moyen de guidage 83, composé par exemple de deux parois de guidage 84 sensiblement parallèles et verticales, peut compléter ce dispositif afin de garantir au besoin la bonne trajectoire des pièces mobiles.

Lorsque le plateau déposable 13 est chargé sur la remorque 1 selon l'invention, les organes médians de verrouillage 77 ne sont plus directement visibles pour l'opérateur. Afin de le renseigner sur l'état de verrouillage du plateau déposable 13 transporté par la remorque 1, un indicateur de la position des oeillets basculants 78 peut avantageusement être prévu. Il peut s'agir d'un simple repère visuel solidaire des oeillets 78, d'un capteur lumineux ou électrique envoyant un signal vers le camion, ou de tout autre moyen approprié.

La traverse d'extrémité avant 10 constitue la limite avant du déplacement longitudinal possible de la traverse mobile de transfert 31. Dans sa partie arrière 5, la remorque 1 selon l'invention comporte également une traverse de butée arrière 85 qui constitue la limite arrière du déplacement possible de la traverse mobile de transfert 31 contre laquelle elle vient buter en fin de course.

La traverse de butée arrière 85 constitue une butée qui marque la fin du déplacement de la traverse mobile de transfert 31 correspondant à la fin des phases de chargement.

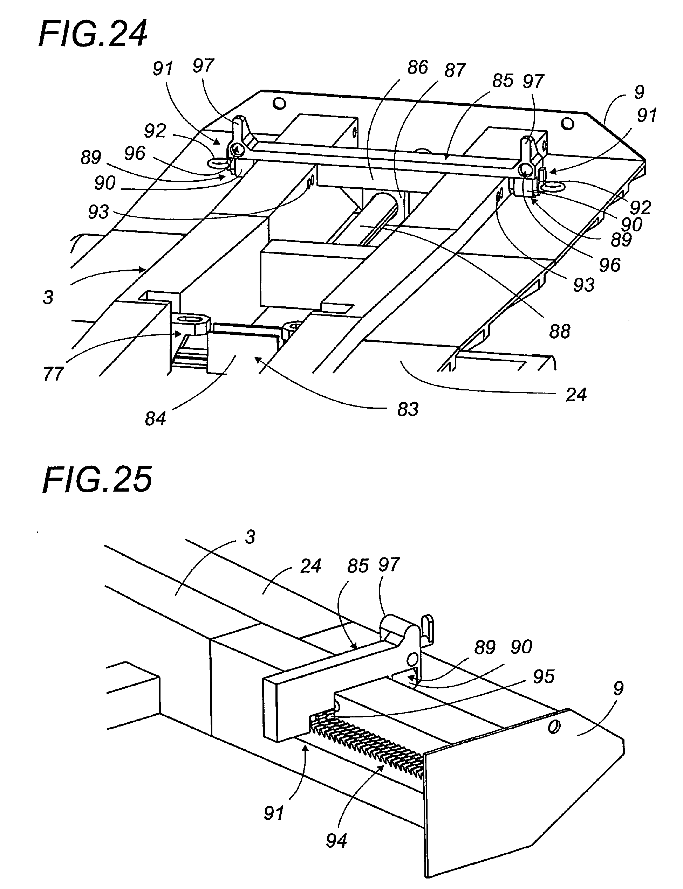

Cette traverse de butée arrière 85, de section par exemple rectangulaire, est représentée plus particulièrement sur les figures 24 à 36. Elle s'étend transversalement à la remorque 1, de préférence par-dessus les longerons 3 de la remorque 1 et de manière sensiblement perpendiculaire à ceux-ci.

A la fin des phases de chargement, la charge 12 doit être entièrement transférée sur la remorque. Le bras de préhension et de manutention 43 du camion 23 fait alors pivoter vers le bas l'extrémité avant de la charge 12, pour que celle-ci vienne reposer sur la remorque 1 dans une position horizontale adaptée au transport ultérieur.

Dans cette position, les organes de sécurité et de maintien 76 de la remorque 1, tels que les verrous 17 ou les organes médians de verrouillage 77, doivent se trouver en regard des moyens complémentaires équipant la charge routière 12 ou portés par celle-ci, respectivement les pièces de coin 15 ou les doigts DIN, afin de pouvoir réaliser un verrouillage efficace de la charge en position de transport.

Un juste positionnement de la traverse de butée arrière 85 sur la partie arrière 5 de la remorque 1 permet de s'assurer que la charge routière 12 se retrouve bien en fin de transfert dans une position correcte de transport.

Afin de rendre possible un réglage de la position de cette traverse de butée arrière 85, celle-ci est préférentiellement montée mobile longitudinalement le long des longerons 3 de la remorque 1.

De préférence, il est prévu un guidage longitudinal et vertical de cette traverse afin de n'autoriser qu'un mouvement longitudinal dans les deux sens de celle-ci. Ce guidage peut être réalisé au moyen d'une paroi sensiblement verticale 86 (figure 24) descendant en sous face de la traverse de butée arrière 85 entre les longerons 3 de la remorque, prolongée par une paroi 87 présentant une ouverture traversante dans laquelle est monté à coulissement un tube de guidage longitudinal 88 appartenant au châssis de la remorque 1.

Afin de faciliter ses déplacements, la traverse de butée arrière 85 peut être munie également de moyens de déplacement 89, de préférence de moyens de roulement 90, coopérant avec les pistes longitudinales de transfert 24 de la remorque 1.

Un dispositif de verrouillage 91, par exemple manuel, permet d'immobiliser la traverse de butée arrière 85 une fois la position adéquate atteinte.

Ce dispositif peut être quelconque. Il peut se matérialiser par exemple comme représenté sur la figure 24 sous la forme d'un simple système de broches 92 coopérant avec une série de logements creux 93 alignés et ménagés par exemple dans les longerons 3 du châssis 2 de la remorque 1.

Comme représenté sur les figures 25 à 27, la traverse de butée arrière 85 peut également être déplaçable devant une règle crantée 94 ou pourvue d'une denture linéaire à faible pas (crémaillère simple ou multiple par exemple) dans un creux de laquelle un élément complémentaire 95 rétractable ou effaçable, porté par la traverse 85 et émergeant de sa sous face vient s'engager à immobilisation dans une position donnée sur la règle.

La position devant être occupée par la butée arrière est prédéterminée par tout type de moyens depuis des marquages servant de repères visuels jusqu'à un indexage fonction de la longueur des charges habituellement transportées.

Avantageusement, un marquage situé à demeure sur le châssis 2 de la remorque 1 peut permettre par simple lecture d'indiquer à l'opérateur la position de verrouillage adéquate de la traverse de butée arrière 85 en fonction de la charge 12 devant être transportée.

Par ailleurs, la traverse de butée arrière 85 peut comporter un dispositif de verrouillage destiné à coopérer avec le moyen de blocage 66 porté par la traverse mobile de transfert 31, permettant d'immobiliser cette traverse mobile de transfert 31 en vue du roulage de la remorque 1.

A cet effet, comme on peut le voir sur la figure 24, elle peut comporter des fourreaux de verrouillage 96 qui permettent l'engagement des doigts de verrouillage 67 s'étendant à l'arrière de la traverse mobile de transfert 31, supprimant le degré de liberté vertical de celle-ci.

Lorsque la traverse mobile de transfert 31 comporte un moyen d'élévation 34, cet engagement n'est possible que si la traverse haute 32 est préalablement ramenée en position basse par l'opérateur, position nécessaire pour permettre le verrouillage correct par les organes de sécurité et de maintien 76 de la charge 12.

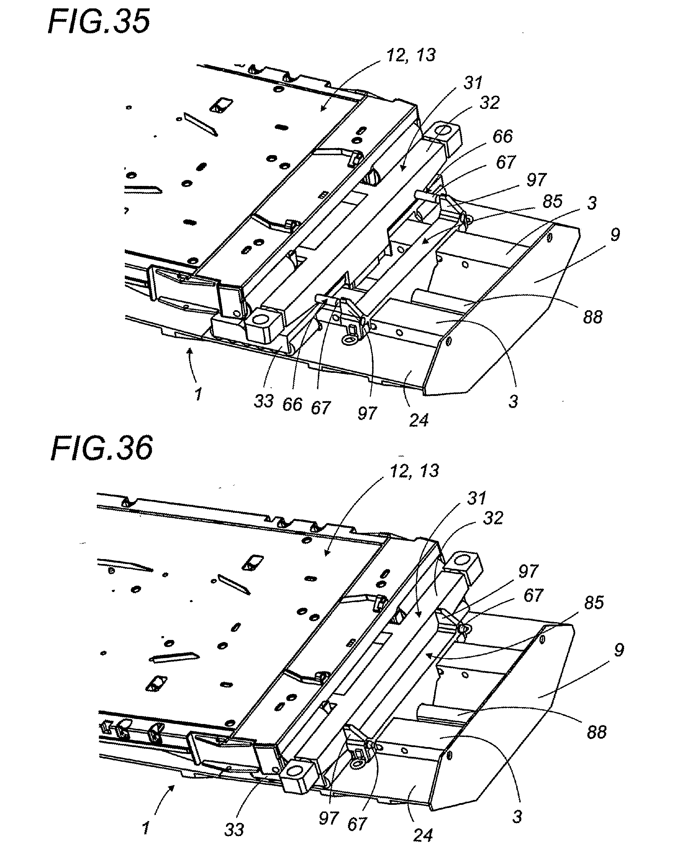

Avantageusement, la traverse de butée arrière 85 peut comporter des saillies 97 s'élevant au-dessus des fourreaux de verrouillage 96 contre lesquelles les doigts de verrouillage 67 de la traverse mobile de transfert 31 viennent buter si la traverse haute 32 n'a pas été correctement abaissée, comme représenté sur la figure 35. En interdisant le verrouillage de la charge 12, ce dispositif rappelle à l'opérateur la nécessité de descendre la traverse haute 32, tout en lui permettant d'effectuer cette manoeuvre sans avoir besoin de réinitialiser le processus de transfert.

Le dispositif ci-dessus peut être complété pour former un ensemble semi-automatique assujetti à la traverse mobile de transfert 31 en vue d'une certaine automaticité dans le chargement.

Cette variante permet de verrouiller automatiquement sur la remorque 1, à une position constante, un plateau déposable 13 de longueur quelconque comprise dans les limites dimensionnelles retenues lors de la construction du système sans connaître au préalable la longueur de celui-ci.

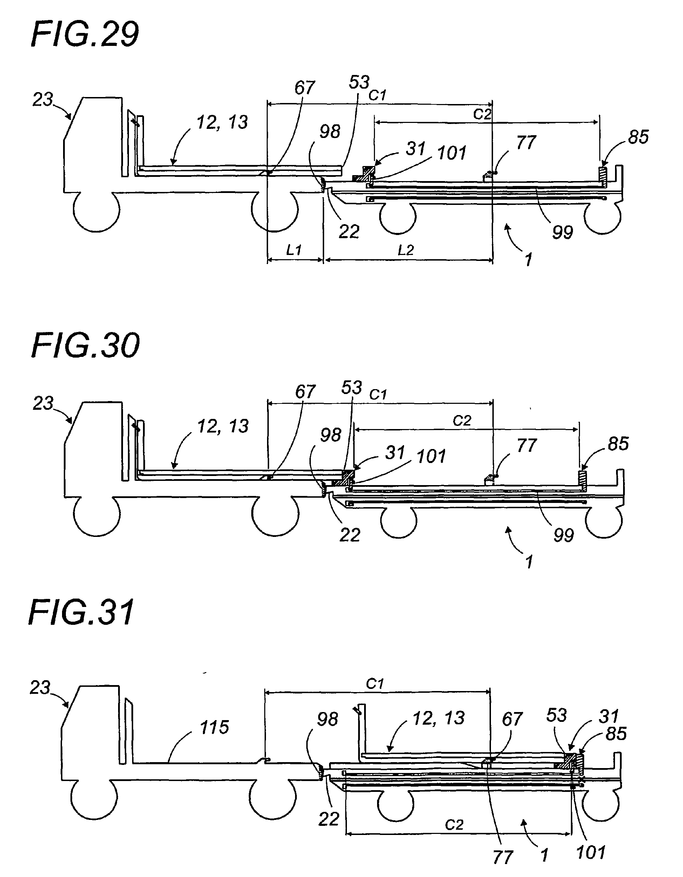

Pour que cela fonctionne, il faut cependant fixer comme constante connue, la distance entre le doigt de verrouillage normalisé 67 (doigt DIN) du plateau déposable 13 lorsqu'il est porté par le camion 23 et la surface d'appui 98 (figures 29 à 31) prévue sur le camion 23 pour le butoir avant 22 de la remorque 1. Cette longueur constante et connue a été indiquée par L1 sur la figure 29.

La distance L2, correspondant à la distance existant sur la remorque 1 entre l'extrémité avant du butoir avant 22 et les organes médians de verrouillage 77 destinés à assurer le verrouillage des doigts de verrouillage normalisé 67 du plateau déposable 13, est également fixée par construction à une valeur constante pour l'ensemble des véhicules compatibles avec ce système.

De ce fait, la distance C1, égale à L1+L2, correspond à la course nécessaire au plateau déposable 13 pour se verrouiller sur la remorque 1 selon l'invention.

La distance C2 correspond, quant à elle, à la course de la traverse mobile de transfert de sa position à l'avant de la remorque jusqu'au contact avec la traverse de butée arrière 85. Par construction, on maintient dans cette variante l'ensemble traverse mobile de transfert 31 - traverse de butée arrière 85 à un écartement constant égal à C2.

Quelle que soit la longueur du plateau 13, si les distances C1 et C2 sont égales, le déplacement de la traverse mobile de transfert 31 jusqu'au contact de l'extrémité arrière 53 du plateau déposable 13 (figure 30) positionne automatiquement la traverse de butée arrière 85 de façon correcte pour permettre, après verrouillage en position de celle-ci, un mouvement relatif correspondant à la course C1 (figure 31).

La mise en position automatique de la traverse de butée arrière 85 est obtenue en liant par construction, à une distance correspondant à la course C1=C2 et seulement dans le sens de déplacement vers l'avant, le déplacement de la traverse de butée arrière 85 au déplacement de la traverse mobile de transfert 31.

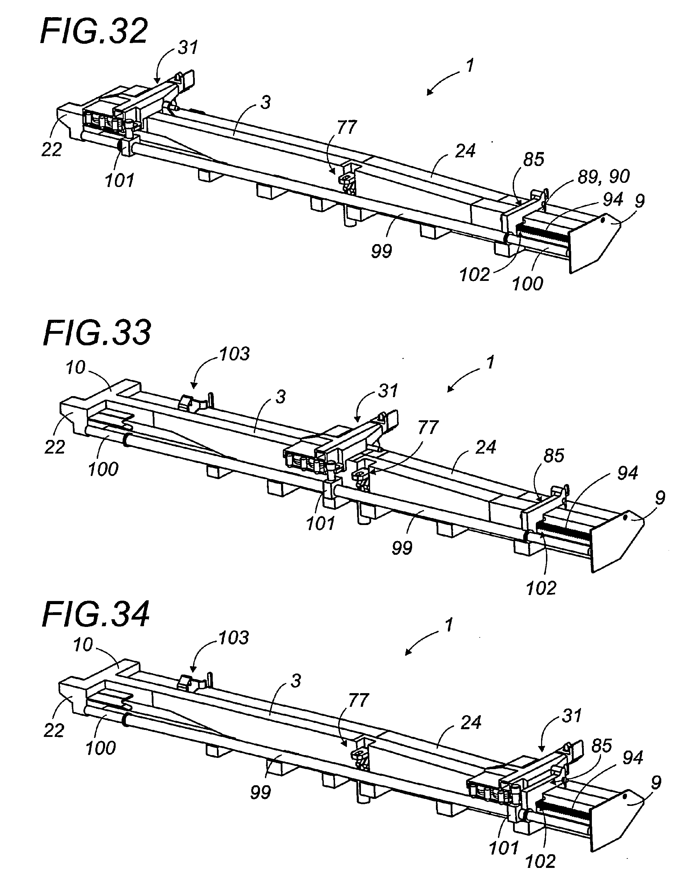

Pour cela et selon une variante préférentielle représentée sur la séquence des figures 32 à 34, la traverse de butée arrière 85 peut être solidarisée à un fourreau tubulaire 99 monté autour d'un tube longitudinal de guidage 100 et pouvant se déplacer par coulissement le long de celui-ci. La traverse mobile de transfert 31 est également reliée au fourreau tubulaire 99 par l'intermédiaire d'un bloc de liaison 101.

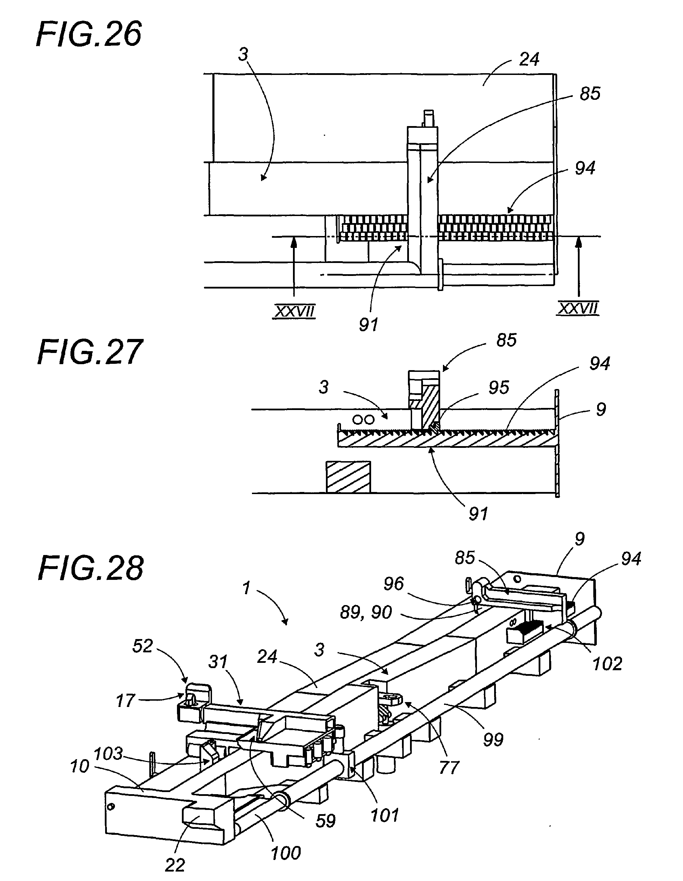

Ainsi, lorsque la traverse mobile de transfert 31 vient chercher le contact au niveau de son interface de chargement 52 à une position unique avec l'extrémité arrière 53 du plateau déposable 13, elle entraîne la traverse de butée arrière 85 dans son déplacement (figures 28 et 32). Ce déplacement de l'ensemble traverse mobile de transfert 31 - traverse de butée arrière 85 pour chercher ce contact peut se faire manuellement avec ou sans l'assistance d'un dispositif d'entraînement.

La traverse de butée arrière 85 est automatiquement bloquée à la bonne position durant ce contact au moyen d'un dispositif anti-recul débrayable 102, par exemple à cliquets juxtaposés et par exemple semblable au dispositif à règle crantée 94 et à élément complémentaire rétractable 95 précédemment décrit.

Lors de l'opération de transfert du plateau déposable 13, la liaison traverse mobile de transfert 31 - traverse de butée arrière 85 est neutralisée car le déplacement de la traverse mobile de transfert 31 s'effectue alors en sens opposé au déplacement initial (figure 33). La rencontre des deux traverses stoppe le mouvement de transfert et correspond à la position de verrouillage du plateau déposable 13 (figures 31 à 34).

La traverse de butée arrière 85 peut retrouver après déchargement de la remorque 1 une position de nature à réinitialiser un futur positionnement automatique en débrayant manuellement le dispositif anti-recul 102.

Lé positionnement automatique décrit ci-dessus peut également s'appliquer au chargement de conteneurs 14, bien que ceux-ci majoritairement normalisés, possèdent en général un entre-axe de verrouillage constant et donc une position unique finale de la traverse mobile de transfert 31 qui rend ce système inutile.

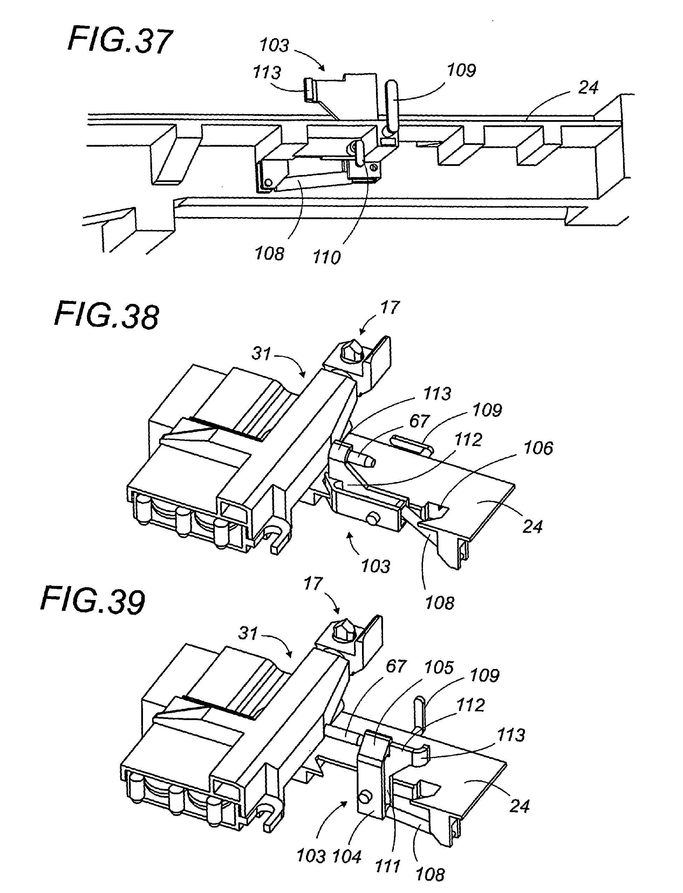

Avantageusement, la remorque selon l'invention peut également être équipée d'au moins deux centreurs escamotables 103, situés sensiblement en vis-à-vis, de part et d'autre du plan de chargement de la remorque 1 selon l'invention et qui sont plus particulièrement représentés sur les figures 37 à 41.

Leur fonction principale consiste à permettre un recentrage des plateaux déposables 13 pendant leur chargement et ensuite à exercer un blocage latéral de ceux-ci durant le transport. Pour cela, ils présentent chacun de préférence une paroi intérieure 104 dont la partie supérieure 105 est conformée en biseau vers l'intérieur et qui est destinée à coopérer par contact de glissement avec la face extérieure des longerons 57 du plateau déposable 13.

Pour exercer cette fonction, les centreurs 103 doivent s'élever au-dessus du niveau des pistes de transfert 24 et de la paroi supérieure 4 des longerons 3 de la remorque, comme représenté sur les figures 37 et 39.

Afin de ne pas s'opposer au passage de la traverse mobile de transfert 31 le long de la remorque lors des phases de chargement ou de déchargement, ces centreurs 103 peuvent être placés en position escamotée en dessous du niveau des pistes de transfert 24.

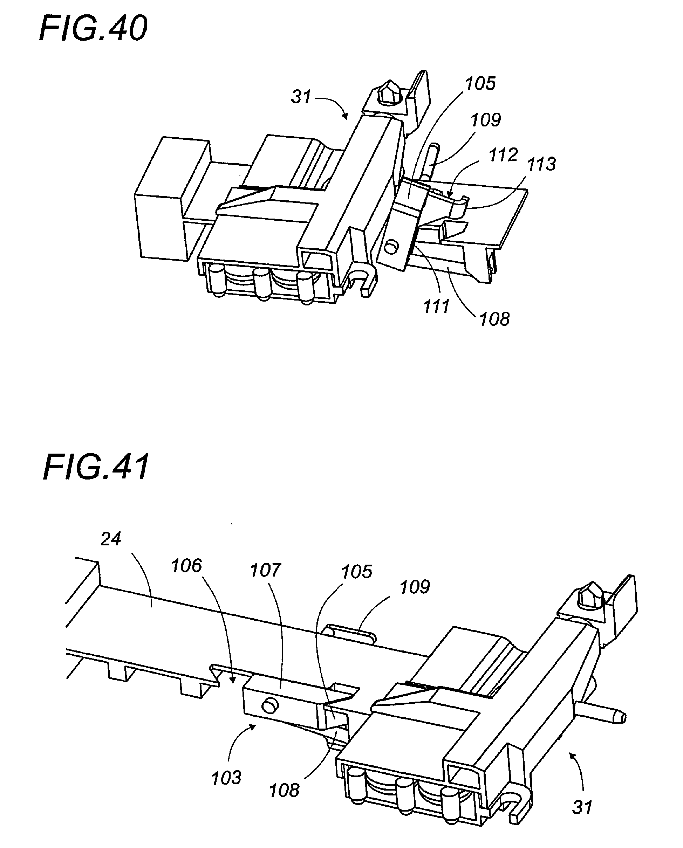

A cette fin, ils peuvent préférentiellement basculer longitudinalement dans une ouverture 106 ménagée à leur niveau dans chaque piste de transfert 24, comme représenté sur la figure 41. Avantageusement, la paroi latérale 107 des centreurs escamotables 103 qui se trouve alors tournée vers le haut, affleure au niveau de la piste de transfert 24 correspondante, reconstituant ainsi une partie de cette piste et facilitant le passage de la traverse mobile de transfert 31.

Selon un mode de réalisation préférentiel, le basculement des centreurs 103 est provoqué automatiquement par le déplacement de la traverse mobile de transfert 31, qui par son mouvement de translation vient pousser le centreur pour le rabattre en position escamotée, comme illustré par la séquence des figures 39 à 41.

Chaque centreur escamotable 103 est préférentiellement relié à un ressort de traction 108 qui exerce sur celui-ci un effort de rappel en position redressée. Grâce à ce ressort, le centreur 103 se replace automatiquement en position redressée de centrage et de blocage latéral après le passage de la traverse mobile de transfert 31.

Selon les variantes, les centreurs 103 peuvent être prévus escamotables dans les deux sens afin de pouvoir s'effacer automatiquement au passage de la traverse mobile de transfert 31 quel que soit le sens de son déplacement, c'est-à-dire indifféremment lors du chargement ou du déchargement d'un plateau déposable.

Ils peuvent également, comme dans la variante représentée, n'être escamotables automatiquement que dans un seul sens de déplacement de la traverse 31, préférentiellement lorsqu'elle se déplace vers l'arrière de la remorque 1. Dans ce cas, ils doivent être placés manuellement en position escamotée avant de procéder aux opérations de déchargement, par exemple au moyen d'un levier de commande 109, puis maintenus de préférence automatiquement, dans cette position à l'aide d'un mécanisme de blocage tel que 110, par exemple commandé manuellement.

De tels mécanismes manuels de commande 109 et de blocage 110 permettent également de faire basculer les centreurs 103 en position escamotée et de les y maintenir de préférence automatiquement pour qu'ils n'interfèrent pas dans les opérations de chargement/déchargement d'un conteneur 14.

Une fois la remorque chargée, la position des leviers de commande 109 visibles de part et d'autre de la remorque 1 peut avantageusement permettre à l'opérateur de vérifier visuellement la position des centreurs escamotables 103 et par là le blocage latéral du plateau déposable 13.

Selon la variante préférentielle représentée, les centreurs escamotables 103 comportent également un dispositif de verrouillage destiné à coopérer avec le moyen de blocage 66 porté par la traverse mobile de transfert 31, permettant d'immobiliser cette traverse mobile de transfert 31 lors d'un déplacement à vide de la remorque 1.

Pour cela, ils comportent sur leur paroi latérale 111 une saillie 112 formant crochet 113, destinée à coopérer avec les doigts de verrouillage 67 qui s'étendent à l'arrière de la traverse mobile de transfert 31.

Avant un déplacement à vide de la remorque 1 selon l'invention, la traverse mobile de transfert 31 est placée à l'avant de la remorque en butée contre la traverse fixe d'extrémité avant 10. Elle doit normalement se retrouver dans une telle position après toute opération de dépose d'une charge 12.

Toute possibilité de mouvement de la traverse mobile de transfert 31 vers l'arrière de la remorque ou en échappement vers le haut est ensuite supprimée par un basculement des centreurs escamotables 103 en position rabattue vers l'avant, qui met en prise les crochets 113 avec les doigts de verrouillage 67 de la traverse mobile de transfert 31.

Les centreurs escamotables 103 sont alors verrouillés dans cette position par un mécanisme de blocage pouvant être indépendant ou confondu avec le mécanisme 110 déjà mentionné.

Un exemple du procédé de transfert selon l'invention va maintenant être décrit, ce qui permettra de mieux comprendre le fonctionnement de la remorque.

Le procédé de chargement s'effectue à l'aide de la traverse mobile de transfert 31. Il comprend les étapes suivantes :
- on immobilise la remorque par ses freins et on abaisse son timon ;
- on aligne le camion 23 dans le prolongement de la remorque 1 selon l'invention et on recule le camion jusqu'à une distance adaptée pour le chargement de la charge 12 sur le camion 23 à l'aide du bras de préhension 43. Pour cela, on place l'arrière du châssis du camion 23 en contact avec le butoir avant 22 de la remorque 1 si elle en est équipée ;
- on positionne la traverse de butée arrière 85 en fonction de la longueur de la charge routière 12 à transférer ;
- on bascule éventuellement les centreurs escamotables 103 et s'ils existent les verrous de coin 17 de la traverse d'extrémité avant 10 en position escamotée, selon la nature de la charge 12 à transférer ;
- on recule au besoin la charge 12, conteneur 14 ou plateau déposable 13, à l'aide du bras de manutention 43 du camion 23 ;
- on effectue les réglages de l'alignement et éventuellement de la hauteur de la traverse mobile de transfert 31 par rapport à l'extrémité arrière 53 de la charge 12 ;
- on place l'extrémité arrière 53 de la charge 12 sur la traverse mobile de transfert 31 en utilisant les interfaces de chargement 52 de celle-ci ;
- on verrouille éventuellement l'extrémité arrière 53 de la charge 12 sur la traverse mobile de transfert 31 si la charge 12 est équipée de pièces de coin normalisées 15 ;
- on transfère, tout en abaissant la partie haute de la traverse mobile de transfert, la charge 12 en appui sur ladite traverse mobile de transfert 31 vers la partie arrière 5 de la remorque 1 au moyen du bras de manutention 43 du camion 23, jusqu'au contact de butée de la traverse mobile de transfert 31 contre la traverse de butée arrière 85 ;
- on verrouille la traverse mobile de transfert 31 à l'arrière de la remorque 1 ;
- on verrouille la charge 12 au moyen d'organes de sécurité et de maintien 76 placés en partie médiane ou à avant de la remorque 1.

Un plateau déposable en position de transport, c'est-à-dire à la fin des phases de chargement, repose par la face inférieure de ses longerons sur ceux de la remorque.

A l'inverse, les conteneurs ISO reposent sur la remorque par leurs quatre pièces inférieures de coin.

Le procédé de déchargement s'effectue en sens inverse.

On décrira plus en détail ci-après le chargement sur une remorque 1 selon un mode de réalisation préférentiel de l'invention, d'une charge routière 12 en prenant comme exemple un conteneur normalisé 14 de vingt pieds (environ six mètres) de longueur, pourvu sur sa face frontale 18 d'une anse de préhension 114.

Le procédé consiste à charger le conteneur 14 sur la remorque 1 à partir du sol et inversement à le décharger de la remorque 1 selon l'invention pour le déposer sur le sol.

On commence par charger le conteneur 14 sur le camion 23. Cette opération étant classique, elle ne sera pas décrite en détail ici. Pour la réaliser, on aligne le camion 23 dans le prolongement du conteneur 14 et on recule le camion jusqu'à une distance adaptée pour le chargement de celui-ci sur le camion 23 à l'aide du bras de préhension 43. Bien entendu, le camion 23 peut déjà se trouver dans une position favorable à la manoeuvre.

Le conteneur 14 est saisi par le dispositif de préhension 43 du bras du camion 23, dont le crochet vient s'engager dans l'anse de préhension 114 du conteneur. Il est soulevé par l'avant et tiré, puis hissé à l'arrière du camion et déposé dans sa position de chargement sur le plateau 115 du camion 23.

Cette phase étant connue, l'originalité du procédé apparaîtra dans le développement qui suit.

La remorque 1 selon l'invention est amenée en alignement avec le camion 23 jusqu'au contact de son butoir avant 22 avec la surface d'appui 98 à l'extrémité arrière du camion 23. Ce contact sert de signal au chauffeur. Il convient de rappeler ici que l'alignement entre le camion 23 et la remorque 1 n'a pas besoin d'être très précis, car la traverse mobile de transfert 31 permet un auto-alignement lors du transfert.

On règle ensuite la traverse de butée arrière 85 de la remorque 1, soit manuellement par rapport à un repère, soit automatiquement par déplacement solidaire du déplacement vers l'avant de la traverse mobile de transfert 31, soit en fonctionnement préréglé selon lequel la distance de la traverse de butée arrière 85 par rapport à l'avant de la remorque 1 est déjà connue car la charge 12 présente une longueur prédéfinie, par exemple normalisée, classiquement dix ou vingt pieds (environ trois ou six mètres).

Dans ce dernier cas, il suffit d'indiquer au mécanisme le type de charge 12, ici le type de conteneur 14 qui va être chargée, à savoir dans notre exemple un conteneur normalisé ISO de vingt pieds (environ six mètres).

La traverse mobile de transfert 31 se trouve à l'état initial en position avant abaissée et libérée en mouvement. On tourne vers le haut, si nécessaire, les blocs mécaniques 18 portant ou intégrant les verrous de coin 17.

En cas de besoin, par la poussée du bras de préhension et de manutention 43 du camion 23 qui entre alors en action, le conteneur 14 se déplace, par exemple en position inclinée vers la remorque 1. Il se déplace vers l'arrière du camion 23 et s'en dégage en porte-à-faux vers la remorque 1 pour que la sous-face de son extrémité arrière 53 vienne se présenter au dessus de la traverse mobile de transfert 31.

Grâce au jeu de réglage 68 latéral et en orientation angulaire, la traverse mobile de transfert 31 est déplacée manuellement pour venir se trouver parfaitement orientée sous la traverse arrière du conteneur 14 terminée par les pièces de coin 15 inférieures arrière, position dans laquelle les verrous de coin 17 de la traverse mobile de transfert 31 se trouvent sous les pièces de coin normalisées 15 correspondantes de la charge 12.

On actionne à ce moment le moyen d'élévation 34, à savoir les soufflets pneumatiques 35, pour faire entrer les doigts de centrage 19 convenablement orientés des verrous de coin 17 dans les trous oblongs des pièces de coin normalisées 15 du conteneur 14.

Cette manoeuvre est facilitée par la rampe oblique formée par le taquet de butée et de centrage 54 que possède éventuellement chaque bloc pivotant 18 porteur d'un verrou de coin 17. Au cours de ce mouvement, les deux blocs pivotants 18 portant ou intégrant chacun un verrou de coin 17 qui avaient préa-lablement été tournés vers le haut, basculent légè-rement par le jeu et le contact de la rampe oblique. On verrouille ensuite le conteneur 14 sur la traverse mobile de transfert 31 par les verrous de coin 17.

La traverse mobile de transfert 31 ainsi chargée, le transfert peut commencer. Sous la poussée du bras de préhension et de manutention 43 du camion 23, le conteneur 14 recule, supporté par la traverse mobile de transfert 31 et l'entraîne avec lui en roulant sur les pistes de transfert 24.

Grâce à la diminution progressive du jeu de réglage 68 existant entre les tunnels de guidage 49 de la traverse mobile de transfert 31 et les rampes de guidage des longerons 3 de la remorque 1, on obtient pendant le déplacement de transfert un véritable effet d'auto-alignement entre la traverse mobile de transfert 31 et l'axe longitudinal de la remorque 1. Le crochet du bras de manutention 43 engagé dans l'anse de préhension 114 soit du conteneur, soit de l'interface de préhension constitue une articulation à degrés multiples de liberté qui autorise les légers débattements d'auto-alignement.

Au cours de ce déplacement de transfert, l'inclinaison du conteneur 14 par rapport à la remorque 1 diminue par la simple cinématique générale de l'ensemble. Cette diminution d'inclinaison est absorbée par les mouvements d'accompagnement des blocs pivotants 18 portant ou intégrant les verrous de coin 17.

Comme indiqué dans la description, les pistes de transfert 24 s'inclinent vers le bas dans la partie arrière 5 de la remorque 1. Arrivée au niveau de la zone de début de pente, la traverse mobile de transfert 31 s'enfonce légèrement jusqu'à une position abaissée de fin de course dans laquelle elle se trouve à une hauteur permettant à la traverse fixe d'extrémité avant 10 de supporter l'autre extrémité du conteneur 14 pour que celui-ci soit horizontal, à savoir parallèle au sol de la route sur laquelle se trouve la remorque 1.

Au cours du déplacement le long de cette dénivellation, l'inclinaison du conteneur 14 se réduit jusqu'à s'annuler lorsque sa base rejoint le plan horizontal du châssis 2 de la remorque 1 et pendant ce déplacement, on amène le niveau de la partie haute de la traverse mobile de transfert dans sa position basse dans laquelle ses doigts de verrouillage 67 viennent s'engager dans les cavités de verrouillage 96 de la traverse de butée arrière 85.

Comme indiqué, pour que cette immobilisation puisse avoir lieu, le moyen d'élévation 34 doit avoir replacé la traverse mobile de transfert 31 en position basse avant d'arriver en fin de course.

La sécurité de fin de course de la traverse de butée arrière 85 décrite ci-dessus évite à l'opérateur une nouvelle manoeuvre si les cavités de verrouil-lage 96 ne se trouvent pas en face des doigts de verrouillage 67 de la traverse mobile de transfert 31.

La traverse mobile de transfert 31 ainsi immobilisée, assure un verrouillage suffisant à l'extrémité arrière 53 du conteneur 14 pour toutes les sollicitations de roulage de la remorque 1.

L'extrémité avant du conteneur 14 est immobilisée à son tour par actionnement des verrous de coin 17 portés à l'avant de la remorque par la traverse fixe d'extrémité avant 10 qui se trouvent, à la fin du transfert, en regard des pièces de coin normalisées 15 inférieures avant du conteneur 14.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir de la portée et du cadre de l'invention.

## Revendications

1. Remorque routière (1) destinée au transport d'une charge notamment routière (12), par exemple un conteneur (14) ou un plateau déposable (13), susceptible d'être chargée et déchargée respectivement sur ou de la remorque (1) à partir d'un ou vers un camion (23) équipé d'un bras (43) de préhension et de manutention des charges, remorque (1) comportant un châssis (2) répondant à la réglementation routière et comprenant au moins un, de préférence deux longerons (3) s'étendant longitudinalement sur toute la longueur de la remorque (1), **caractérisée en ce qu'**elle est équipée d'une traverse mobile de transfert (31) posée transversalement sur la remorque (1) et destinée à recevoir en appui l'extrémité arrière (53) de la charge routière (12) et à se déplacer dans les deux sens le long des longerons (3) de cette remorque (1) sous l'action du bras de manutention (43) du camion (23) sur la charge routière (12), et **en ce que**:
- le ou les longerons (3) et la partie supérieure de la remorque (1), ainsi que la partie inférieure de la traverse mobile de transfert (31) sont conformés et disposés de manière à créer entre eux, lorsque la traverse mobile de transfert (31) se trouve dans la partie avant (11) de la remorque (1), un jeu de réglage (68) autorisant un déplacement latéral et/ou angulaire d'ajustement de la traverse mobile de transfert (31) par rapport à l'axe longitudinal de la remorque (1) afin de pouvoir compenser un écart d'alignement entre le camion (23) et la remorque (1) lors du transfert,
et **en ce que** :
- ce jeu de réglage (68) diminue progressivement lorsque la traverse mobile de transfert (31) se déplace vers l'arrière de la remorque (1), provoquant ainsi un recentrage latéral et angulaire de la traverse mobile de transfert (31) par rapport à l'axe longitudinal de la remorque (1).

2. Remorque routière selon la revendication précédente **caractérisée en ce que** ses longerons (3) convergent l'un vers l'autre dans la partie arrière (5) de la remorque (1) de manière à délimiter entre eux une convergence de centrage (6).

3. Remorque routière selon l'une quelconque des revendications précédentes **caractérisée en ce que** les longerons (3) ne sont pas horizontaux sur toute leur longueur, mais descendent dans la partie arrière (5) de la remorque (1) créant ainsi une dénivellation entre leur extrémité avant (7) et leur extrémité arrière (8).

4. Remorque routière selon l'une quelconque des revendications précédentes **caractérisée en ce que** les longerons (3) sont réunis dans la partie avant (11) de la remorque (1) par une traverse fixe d'extrémité avant (10) s'étendant transversalement à la remorque (1) et constituant la limite avant du déplacement longitudinal possible de la traverse mobile de transfert (31).

5. Remorque routière selon l'une quelconque des revendications précédentes **caractérisée en ce qu'**elle comporte en outre des pistes de transfert (24) prévues longitudinalement de chaque côté de la remorque (1).

6. Remorque routière selon la revendication précédente **caractérisée en ce que** les pistes longitudinales de transfert (24) bordent le côté extérieur des longerons (3) de la remorque (1) en restant sensiblement parallèles à la paroi supérieure (4) de ceux-ci.

7. Remorque routière selon l'une quelconque des revendications précédentes **caractérisée en ce qu'**elle comporte en outre dans sa partie avant (11) une surface plane (26) sensiblement horizontale, disposée entre les longerons (3) à un niveau inférieur à celui de leur paroi supérieure (4), permettant une assistance à la correction d'alignement.

8. Remorque routière selon la revendication précédente **caractérisée en ce que** la surface plane (26) débute par une rampe ascendante (27).

9. Remorque routière selon l'une quelconque des revendications précédentes **caractérisée en ce que** la traverse mobile de transfert (31) comporte au moins une interface de chargement (52) située sur la partie supérieure de cette traverse mobile de transfert (31) et coopérant avec des moyens complémentaires (15, 60) portés par la charge routière (12) ou équipant celle-ci.

10. Remorque routière selon la revendication précédente **caractérisée en ce que** l'au moins une interface de chargement comprend au moins un plan de chargement (59) s'étendant sur la face supérieure de la traverse (31) et susceptible de recevoir l'extrémité arrière (60) d'au moins un des longerons (57) normalisés d'un plateau déposable (13).

11. Remorque routière selon la revendication précédente **caractérisée en ce qu'**elle comporte en outre des centreurs de chargement (61) sous la forme de deux barres longitudinales (62) terminées chacune par une extrémité en pointe (63), pénétrant à l'intérieur du tunnel (58) normalisé du plateau déposable (13).

12. Remorque routière selon la revendication 5 **caractérisée en ce que** la traverse mobile de transfert (31) comporte des moyens de déplacement (44) aptes à porter la traverse mobile de transfert (31) et la charge (12) en appui sur celle-ci, permettant à la traverse transfert (31) de se déplacer sur les pistes longitudinales de transfert (24) de la remorque (1).

13. Remorque routière selon l'une quelconque des revendications 9 à 11 **caractérisée en ce que** la traverse mobile de transfert (31) comporte un moyen d'élévation (34) permettant de modifier la hauteur de l'interface de chargement (52) par rapport au plan défini par la paroi supérieure (4) des longerons (3) de la remorque (1).

14. Remorque routière selon la revendication précédente **caractérisée en ce que** la traverse mobile de transfert (31) se compose d'une traverse haute (32) et d'une traverse basse (33) se trouvant superposées l'une sur l'autre en fonctionnement, le moyen d'élévation (34) étant intercalé entre elles.

15. Remorque routière selon l'une quelconque des revendications précédentes **caractérisée en ce que** la traverse mobile de transfert (31) présente dans sa sous face des tunnels de guidage (49) ouverts vers le bas permettant de la guider le long des longerons (3) de la remorque (1).

16. Remorque routière selon l'une quelconque des revendications précédentes **caractérisée en ce que** la traverse mobile de transfert (31) comporte de chaque côté, au moins une cavité de réception (50) destinée à recevoir les rouleaux pouvant équiper l'extrémité arrière (53) de la charge routière (12).

17. Remorque routière selon l'une quelconque des revendications précédentes **caractérisée en ce que** la traverse mobile de transfert (31) comporte un moyen de blocage (66) destiné à coopérer avec un dispositif de verrouillage complémentaire situé à un endroit approprié de la remorque (1).

18. Remorque routière selon la revendication précédente **caractérisée en ce que** le moyen de blocage (66) comprend deux doigts de verrouillage (67) s'étendant à l'arrière de la traverse mobile de transfert (31).

19. Remorque routière selon l'une quelconque des revendications précédentes **caractérisée en ce que** la traverse mobile de transfert (31) comporte en outre un moyen d'assistance au réglage (73).

20. Remorque routière selon la revendication précédente **caractérisée en ce que** le moyen d'assistance au réglage (73) comprend une série de billes (74) montées en déplacement libre sur elles-mêmes et en enfoncement dans un logement (75).

21. Remorque routière selon l'une quelconque des revendications précédentes **caractérisée en ce qu'**elle comporte en outre dans sa partie arrière (5) une traverse de butée arrière (85) s'étendant transversalement à la remorque (1) et constituant la limite arrière du déplacement longitudinal possible de la traverse mobile de transfert (31).

22. Remorque routière selon la revendication précédente **caractérisée en ce que** la traverse de butée arrière (85) est montée mobile longitudinalement le long des longerons (3) de la remorque (1) et comporte un dispositif de verrouillage (91) permettant d'immobiliser la traverse de butée arrière (85) une fois la position adéquate atteinte.

23. Remorque routière selon les revendications 5 et 22 **caractérisée en ce que** la traverse de butée arrière (85) comporte des moyens de déplacement (89) coopérant avec les pistes longitudinales de transfert (24) de la remorque (1).

24. Remorque routière selon la revendication 22 **caractérisée en ce que** le dispositif de verrouillage (91) est un système de broches (92) coopérant avec une série de logements creux (93) alignés et ménagés dans le châssis (2) de la remorque (1).

25. Remorque routière selon la revendication 22 **caractérisée en ce que** le dispositif de verrouillage (91) comporte une règle crantée (94) ou pourvue d'une denture linéaire à faible pas, dans un creux de laquelle un élément complémentaire (95) rétractable ou effaçable, porté par la traverse (85) et émergeant de sa sous face vient s'engager à immobilisation dans une position donnée sur la règle.

26. Remorque routière selon la revendication 22 **caractérisée en ce que** le déplacement de la traverse de butée arrière (85) est lié par construction et seulement dans le sens de déplacement vers l'avant, au déplacement de la traverse mobile de transfert (31).

27. Remorque routière selon la revendication 17 et l'une quelconque des revendications 21 à 26 **caractérisée en ce que** la traverse de butée arrière (85) comporte un dispositif de verrouillage destiné à coopérer avec le moyen de blocage (66) porté par la traverse mobile de transfert (31), permettant d'immobiliser cette traverse mobile de transfert (31) en vue du roulage de la remorque (1).

28. Remorque routière selon la revendication 18 et la revendication précédente **caractérisée en ce que** la traverse de butée arrière (85) comporte des fourreaux de verrouillage (96) dans lesquels les doigts de verrouillage (67) s'étendant à l'arrière de la traverse mobile de transfert (31) peuvent s'engager, afin d'immobiliser cette traverse mobile de transfert (31) en vue du roulage de la remorque (1).

29. Remorque routière selon la revendication précédente **caractérisée en ce que** la traverse de butée arrière (85) comporte des saillies (97) qui s'élèvent au dessus des réceptacles de verrouillage (96).

30. Remorque routière selon l'une quelconque des revendications précédentes **caractérisée en ce qu'**elle comporte en outre des organes de sécurité et de maintien (76), destinés à coopérer avec des moyens complémentaires équipant la charge routière (12) ou portés par celle-ci, qui permettent d'immobiliser et de bloquer la charge routière (12) lorsqu'elle a été chargée sur la remorque (1).

31. Remorque routière selon la revendication précédente **caractérisée en ce que** les organes de sécurité et de maintien (76) sont des verrous de coin (17) susceptibles de coopérer avec les pièces de coin (15) équipant les coins inférieurs de certaines charges (12).

32. Remorque routière selon la revendication précédente **caractérisée en ce que** l'un au moins de ces verrous de coin (17) est monté sur ou intégré dans un bloc pivotant (54).

33. Remorque routière selon la revendication 31 ou 32 **caractérisée en ce que** l'un au moins de ces verrous de coin (17) comporte un doigt de centrage (19) en saillie vers le haut et dont deux faces opposées d'extrémité (20) sont en oblique.

34. Remorque routière selon l'une quelconque des revendications 31 à 33 **caractérisée en ce que** l'un au moins de ces verrous de coin (17) comporte un taquet de centrage (55) s'élevant sous la forme d'une paroi sensiblement verticale à partie supérieure (56) inclinée en direction du verrou (17), à l'arrière ou sur le côté extérieur du verrou (17).

35. Remorque routière selon la revendication 30 **caractérisée en ce que** les organes de sécurité et de maintien (76) sont des organes médians de verrouillage (77) destinés à coopérer avec les doigts de verrouillage normalisés appelés doigts DIN équipant certaines charges (12).

36. Remorque routière selon la revendication précédente **caractérisée en ce que** les organes médians de verrouillage (77) sont formés chacun d'un oeillet (78) pivotant, de manière à pouvoir passer d'une position escamotée de repos dans laquelle il laisse passer librement la traverse mobile de transfert (31), dans une position déployée de verrouillage dans laquelle il vient entourer le doigt DIN correspondant.

37. Remorque routière selon l'une quelconque des revendications précédentes **caractérisée en ce qu'**elle comporte en outre au moins deux centreurs escamotables (103), situés sensiblement en vis-à-vis de part et d'autre du plan de chargement de la remorque (1), et susceptibles de passer d'une position escamotée dans laquelle ils laissent passer librement la traverse mobile de transfert (31), dans une position redressée dans laquelle ils permettent un recentrage des plateaux déposables (13) pendant leur chargement, puis ils exercent un blocage latéral de ceux-ci pendant le transport.

38. Remorque routière selon la revendication précédente **caractérisée en ce que** les centreurs escamotables (103) présentent chacun une paroi intérieure (104) dont la partie supérieure (105) est conformée en biseau vers l'intérieur et qui est destinée à coopérer par contact de glissement avec la face extérieure des longerons (57) d'un plateau déposable (13).

39. Remorque routière selon la revendication 37 ou 38 **caractérisée en ce que**, en position escamotée, la paroi latérale (107) des centreurs escamotables (103) qui se trouve alors tournée vers le haut, affleure au niveau de la piste de transfert (24) correspondante.

40. Remorque routière selon l'une quelconque des revendications 37 à 39 **caractérisée en ce que** le basculement des centreurs escamotables (103) en position escamotée est provoqué automatiquement par le déplacement de la traverse mobile de transfert (31).

41. Remorque routière selon l'une quelconque des revendications 37 à 40 **caractérisée en ce que** chaque centreur escamotable (103) est relié à un ressort de traction (108) qui exerce sur lui un effort de rappel en position redressée.

42. Remorque routière selon l'une quelconque des revendications 37 à 41 **caractérisée en ce que** les centreurs escamotables (103) peuvent être placés manuellement en position escamotée au moyen d'un levier de commande (109) puis maintenus dans cette position à l'aide d'un mécanisme de blocage (110).

43. Remorque routière selon la revendication précédente **caractérisée en ce que** les centreurs escamotables (103) placés en position escamotée par le levier de commande (109) sont maintenus automatiquement dans cette position par un mécanisme de blocage automatique.

44. Remorque routière selon la revendication 17 et l'une quelconque des revendications 37 à 43 **caractérisée en ce que** les centreurs escamotables (103) comportent un dispositif de verrouillage destiné à coopérer avec le moyen de blocage (66) porté par la traverse mobile de transfert (31), permettant d'immobiliser cette traverse mobile de transfert (31) lors d'un déplacement à vide de la remorque (1).

45. Remorque routière selon la revendication 18 et la revendication précédente **caractérisée en ce que** les centreurs escamotables (103) comportent sur leur paroi latérale (111) une saillie (112) formant crochet (113), destinée à coopérer avec les doigts de verrouillage (67) s'étendant à l'arrière de la traverse mobile de transfert (31), afin d'immobiliser cette traverse mobile de transfert (31) lors d'un déplacement à vide de la remorque (1).

46. Remorque routière selon l'une quelconque des revendications précédentes **caractérisée en ce qu'**elle comporte en outre un butoir avant (22) faisant saillie à l'avant de la remorque (1) et dont la longueur est calculée pour représenter l'espacement optimal à respecter entre le camion (23) et la remorque (1) afin d'effectuer un transfert de la charge (12) dans de bonnes conditions.

47. Procédé de chargement d'une charge notamment routière (12), par exemple un conteneur (14) ou un plateau déposable (13), sur une remorque routière (1) selon l'une quelconque des revendications précédentes à partir d'un camion (23) équipé d'un bras (43) de préhension et de manutention des charges, cette remorque (1) étant équipée d'organes de sécurité et de maintien (76) permettant d'immobiliser la charge (12) sur la remorque et de la traverse mobile de transfert (31) posée transversalement sur la face supérieure de la remorque (1), destinée à recevoir en appui l'extrémité arrière (53) de la charge routière (12) au moyen d'une interface de chargement (52) et à se déplacer le long des longerons (3) de la remorque (1) sous l'action du bras de manutention (43) du camion (23) sur la charge routière (12) entre une traverse fixe d'extrémité avant (10) et une traverse de butée arrière (85), procédé comprenant les étapes suivantes :
- on immobilise la remorque (1) par ses freins et on abaisse son timon ;
- on aligne le camion (23) sensiblement dans le prolongement de la remorque (1) et on recule le camion jusqu'à une distance adaptée pour le chargement de la charge (12) sur le camion (23) à l'aide du bras de préhension (43) en utilisant éventuellement comme repère, le butoir avant (22) de la remorque (1) si elle en est équipée ;
- on règle la position de la traverse de butée arrière (85) en fonction de la longueur de la charge (12) à transférer ;
- on recule, si nécessaire, la charge (12) à l'aide du bras de manutention (43) du camion (23) ;
- on ajuste la position latérale et angulaire et éventuellement la hauteur de la traverse mobile de transfert (31) par rapport à l'extrémité arrière (53) de la charge (12) ;
- on place l'extrémité arrière (53) de la charge (12) sur la traverse mobile de transfert (31) en utilisant l'interface de chargement (52) de celle-ci ;
- on verrouille des verrous tournants (17) dans les pièces inférieures (15) de coin d'un conteneur ISO ;
- on transfère la charge (12) en appui sur la traverse mobile de transfert (31) vers la partie arrière (5) de la remorque (1) au moyen du bras de manutention (43) du camion (23) jusqu'à effacement des centreurs et jusqu'au contact de butée de la traverse mobile de transfert (31) contre la traverse de butée arrière (85), provoquant durant le déplacement un recentrage de la traverse mobile de transfert (31) par rapport à l'axe longitudinal de la remorque (1) ;
- on verrouille la traverse mobile de transfert (31) à l'arrière de la remorque (1) ;
- on verrouille la charge (12) sur la remorque au moyen des organes de sécurité et de maintien (76).

48. Procédé selon la revendication précédente **caractérisé en ce que** des centreurs escamotables (103) se redressent une fois que la traverse mobile de transfert (31) les a passés lors de son mouvement de translation vers la traverse de butée arrière (85).

## Claims

1. Road trailer (1) intended for the transport of a load in particular a road transport load (12), for instance a container (14) or a pallet (13), to be loaded and unloaded on or from the trailer (1) from or on a truck (23) equipped with a handling arm (43) for gripping and handling the loads, the trailer (1) including a frame (2) responding to the road traffic regulations and comprising at least one, preferably two side rails (3) extending longitudinally for the whole length of the trailer (1), **characterized in that** it is equipped with a mobile transfer crossbar (31) transversely situated on the trailer (1) and intended to receive in support the rear end (53) of the road transport load (12) and to move both ways along the side rails (3) of this trailer (1) under the action of the handling arm (43) of the truck (23) on the road transport load (12), **and in that :**
- the side rail(s) (3) and the upper part of the trailer (1), as well as the lower part of the mobile transfer crossbar (31), are formed and arranged in order to create an adjusting clearance (68) among each other, when the mobile transfer crossbar (31) is in the front part (11) of the trailer (1), authorizing an adjustment of the angular and/or lateral displacement of the mobile transfer crossbar (31) to the longitudinal axis of the trailer (1) in order to be able to compensate an aligning gap between the truck (23) and the trailer (1) during the transfer, **and in**
**that :**
- this adjusting clearance (68) diminishes progressively when the mobile transfer crossbar (31) moves towards the rear of the trailer (1), thus causing an angular and lateral recentring of the mobile transfer crossbar (31) to the longitudinal axis of the trailer (1).

2. Road trailer according to the previous claim **characterized in that** its side rails (3) converge towards one another in the rear part (5) of the trailer (1) in order to delimit a centring convergence (6) between each other.

3. Road trailer according to any of the previous claims **characterized in that** the side rails (3) are not horizontal along their whole length, but descend in the rear part (5) of the trailer (1) thus creating a difference in the level between their front end (7) and their rear end (8).

4. Road trailer according to any of the previous claims **characterized in that** the side rails (3) are united in the front part (11) of the trailer (1) by a fixed front end crossbar (10) extending transversely to the trailer (1) and making up the front limit of the possible longitudinal displacement of the mobile transfer crossbar (31).

5. Road trailer according to any of the previous claims **characterized in that** it furthermore includes transfer tracks (24) longitudinally of each side of the trailer (1).

6. Road trailer according to the previous claim **characterized in that** the longitudinal transfer tracks (24) border the outside of the side rails (3) of the trailer (1), remaining essentially parallel to the upper wall (4) of the latter.

7. Road trailer according to any of the previous claims **characterized in that** it furthermore includes an essentially horizontal plane surface (26) in its front part (11), disposed between the side rails (3) at a lower level than that of their upper wall (4), allowing assistance in the aligning correction.

8. Road trailer according to the previous claim **characterized in that** the plane surface (26) starts with an ascending ramp (27).

9. Road trailer according to any of the previous claims **characterized in that** the mobile transfer crossbar (31) includes at least one loading interface (52) situated on the upper part of this mobile transfer crossbar (31) and cooperating with complementary means (15, 60) carried by the road transport load (12) or being equipment for it.

10. Road trailer according to the previous claim **characterized in that** the at least one loading interface includes at least one loading plane (59) extending on the upper face of the crossbar (31) and capable of receiving the rear end (60) of at least one of the normalized side rails (57) of a pallet (13).

11. Road trailer according to the previous claim **characterized in that** it furthermore includes loading centring tools (61) in the form of two longitudinal bars (62) each terminated by a pointed end (63), penetrating inside the normalized tunnel (58) of the pallet (13).

12. Road trailer according to claim 5 **characterized in that** the mobile transfer crossbar (31) includes displacement means (44) able to carry the mobile transfer crossbar (31) and the load (12) in support of the latter, allowing the transfer crossbar (31) to move on the longitudinal transfer tracks (24) of the trailer (1).

13. Road trailer according to any of the claims 9 to 11 **characterized in that** the mobile transfer crossbar (31) includes a lifting means (34) allowing to modify the height of the loading interface (52) in relation to the plane defined by the upper wall (4) of the side rails (3) of the trailer (1).

14. Road trailer according to the previous claim **characterized in that** the mobile transfer crossbar (31) is made up of a high crossbar (32) and of a low crossbar (33) which are superposed on one another in operation, the lifting means (34) being intercalated among them.

15. Road trailer according to any of the previous claims **characterized in that** the mobile transfer crossbar (31) presents guidance tunnels (49) in its lower face, which are open downwards allowing to guide it along the side rails (3) of the trailer (1).

16. Road trailer according to any of the previous claims **characterized in that** the mobile transfer crossbar (31) includes on each side, at least one reception cavity (50) intended to receive the rollers being able to equip the rear end (53) of the road transport load (12).

17. Road trailer according to any of the previous claims **characterized in that** the mobile transfer crossbar (31) includes a locking means (66) for cooperating with a complementary locking device, situated at an appropriated place in the trailer (1).

18. Road trailer according to the previous claim **characterized in that** the locking means (66) includes two locking fingers (67) extending behind the mobile transfer crossbar (31).

19. Road trailer according to any of the previous claims **characterized in that** the mobile transfer crossbar (31) furthermore includes an assistance means for adjusting (73).

20. Road trailer according to the previous claim **characterized in that** the assistance means for adjusting (73) includes a series of spheres (74) mounted in free displacement on themselves and penetrating into a housing (75).

21. Road trailer according to any of the previous claims **characterized in that** it furthermore includes a rear abutting crossbar (85) in its rear part (5), extending transversely to the trailer (1) and making up the rear limit of the possible longitudinal displacement of the mobile transfer crossbar (31).

22. Road trailer according to the previous claim **characterized in that** the rear abutting crossbar (85) is mounted longitudinally mobile along the side rails (3) of the trailer (1) and includes a locking device (91) allowing to immobilize the rear abutting crossbar (85) once the suitable position has been reached.

23. Road trailer according to claims 5 and 22 **characterized in that** the rear abutting crossbar (85) includes displacement means (89) cooperating with the longitudinal transfer tracks (24) of the trailer (1).

24. Road trailer according to claim 22 **characterized in that** the locking device (91) is a pin system (92) cooperating with a series of hollow housings (93) which are aligned and built in the frame (2) of the trailer (1).

25. Road trailer according to claim 22 **characterized in that** the locking device (91) includes a notched ruler (94) or is provided with a small step linear toothing, in a hollow of which a complementary retractable element (95), carried by the crossbar (85) and emerging from its lower face, gears for immobilization in a given position on the ruler.

26. Road trailer according to claim 22 **characterized in that** the displacement of the rear abutting crossbar (85) is connected by construction and only for displacement towards the front, with the displacement of the mobile transfer crossbar (31).

27. Road trailer according to claim 17 and any of the claims 21 to 26 **characterized in that** the rear abutting crossbar (85) includes a locking device for cooperating with the locking means (66) carried by the mobile transfer crossbar (31), allowing to immobilize this mobile transfer crossbar (31) for the transport of the trailer (1).

28. Road trailer according to claim 18 and the previous claim, **characterized in that** the rear abutting crossbar (85) includes locking sheaths (96) in which the locking fingers (67) extending behind the mobile transfer crossbar (31) can gear, for immobilizing this mobile transfer crossbar (31) for the transport of the trailer (1).

29. Road trailer according to the previous claim **characterized in that** the rear abutting crossbar (85) includes protrusions (97) which rise over locking containers (96).

30. Road trailer according to any of the previous claims **characterized in that** it furthermore includes security and maintaining elements (76), intended to cooperate with complementary means being equipment for the road transport load (12) or carried by the latter, which allow to immobilize and block the road transport load (12) when it has been loaded on the trailer (1).

31. Road trailer according to the previous claim **characterized in that** the security and maintaining elements (76) are corner latches (17) suitable to cooperate with the corner parts (15) being equipment for the lower corners of certain loads (12).

32. Road trailer according to the previous claim **characterized in that** the at least one of these corner latches (17) is mounted on or integrated into a pivoting block (54).

33. Road trailer according to claim 31 or 32 **characterized in that** the at least one of these corner latches (17) includes a centring finger (19) protruding upwards and whose two opposed end sides (20) are oblique.

34. Road trailer according to any of the claims 31 to 33 **characterized in that** the at least one of these corner latches (17) includes a centring block (55) rising under the form of a wall essentially vertical with the upper part (56) inclined in the direction of the latch (17), to the rear or to the outside of the latch (17).

35. Road trailer according to claim 30 **characterized in that** the security and maintaining elements (76) are central locking elements (77) intended to cooperate with the normalized locking fingers, called DIN fingers, being equipment for certain loads (12).

36. Road trailer according to the previous claim **characterized in that** the central locking elements (77) are each formed of a pivoting grommet (78), to be able to pass from an invisible resting position in which it lets the mobile transfer crossbar (31) freely pass, into a spread locking position in which it surrounds the corresponding DIN finger.

37. Road trailer according to any of the previous claims **characterized in that** it furthermore includes at least two retractable centring tools (103), essentially placed opposite each other on both sides of the loading plane of the trailer (1), and suitable to pass from an invisible position in which they let the mobile transfer crossbar (31) freely pass, into a straightened position in which they allow a recentring of the pallets (13) while loading them, then they exercise a lateral locking of the latter during transport.

38. Road trailer according to the previous claim **characterized in that** the retractable centring tools (103) each present an inner wall (104) whose upper part (105) is formed diagonally inwards and is intended to cooperate by sliding contact with the external side of the side rails (57) of a pallet (13).

39. Road trailer according to claim 37 or 38 **characterized in that**, in the concealable position, the side wall (107) of the retractable centring tools (103) which is then turned upwards, flushes with the corresponding transfer path (24).

40. Road trailer according to any of the claims 37 to 39 **characterized in that** the swinging of the retractable centring tools (103) in the concealable position is automatically induced by the displacement of the mobile transfer crossbar (31).

41. Road trailer according to any of the claims 37 to 40 **characterized in that** each retractable centring tool (103) is connected to a tension spring (108) which exercises an effort of returning into the straightened position onto it.

42. Road trailer according to any of the claims 37 to 41 **characterized in that** the retractable centring tools (103) can be manually placed in the concealable position by means of a control lever (109) then maintained in this position by means of a locking mechanism (110).

43. Road trailer according to the previous claim **characterized in that** the retractable centring tools (103) placed in concealable position by the control lever (109) are automatically maintained in this position by an automatic locking mechanism.

44. Road trailer according to claim 17 and any of the claims 37 to 43 **characterized in that** the retractable centring tools (103) include a locking device for cooperating with the locking means (66) carried by the mobile transfer crossbar (31), allowing to immobilize this mobile transfer crossbar (31) during an empty displacement of the trailer (1).

45. Road trailer according to claim 18 and the previous claim **characterized in that** the retractable centring tools (103) on their side wall (111) include a protrusion (112) forming a hook (113), intended to cooperate with the locking fingers (67) extending behind the mobile transfer crossbar (31) for immobilizing this mobile transfer crossbar (31) during an empty running of the trailer (1).

46. Road trailer according to any of the previous claims **characterized in that** it furthermore includes a front stop (22) protruding to the front of the trailer (1) and whose length is calculated to represent the optimal spacing between the truck (23) and the trailer (1) for carrying out the transport of the load (12) in good conditions.

47. Loading process for a load, in particular a road transport load (12), for instance a container (14) or a pallet (13), onto a road trailer (1) according to any of the previous claims, starting from a truck (23) equipped with an arm (43) for gripping and handling the loads, this trailer (1) being equipped with security and maintaining elements (76) allowing to immobilize the load (12) on the trailer and the mobile transfer crossbar (31) situated transversely on the upper side of the trailer (1), intended to receive the rear end (53) of the road transport load (12) in support by means of a loading interface (52) and to move along the side rails (3) of the trailer (1) under the action of the handling arm (43) of the truck (23) on the road transport load (12) between a fixed front end crossbar (10) and a rear abutting crossbar (85), the process comprising the following steps :
- one immobilizes the trailer (1) by its brakes and one lowers its drawbar;
- one aligns the truck (23) essentially in the prolongation of the trailer (1) and one drives the truck backwards to a suitable distance for loading the load (12) on the truck (23) with the help of the handling arm (43), possibly using as a mark the front stop (22) of the trailer (1) if it is equipped with one;
- one adjusts the position of the rear abutting crossbar (85) according to the length of the load (12);
- one moves the load (12) backwards, if necessary, with the help of the handling arm (43) of the truck (23);
- one adjusts the angular and side position and possibly the height of the mobile transfer crossbar (31) to the rear end (53) of the load (12);
- one places the rear end (53) of the load (12) on the mobile transfer crossbar (31) using the loading interface (52) of the latter;
- one locks turning latches (17) in the lower corner parts (15) of an ISO container;
- one transfers the load (12) in support on the mobile transfer crossbar (31) towards the rear part (5) of the trailer (1) by means of the handling arm (43) of the truck (23) until the retraction of the centring tools and until the abutting contact of the mobile transfer crossbar (31) against the rear abutting crossbar (85), causing a recentring of the mobile transfer crossbar (31) to the longitudinal axis of the trailer (1) during the displacement;
- one locks the mobile transfer crossbar (31) behind the trailer (1);
- one locks the load (12) on the trailer by means of the security and maintaining elements (76).

48. Process according to the previous claim **characterized in that** retractable centring tools (103) rises once the mobile transfer crossbar (31) has passed them during its translatory motion towards the rear abutting crossbar (85).

## Patentansprüche

1. Transportanhänger (1) für den Transport einer Last, vor allem Straßentransportgüter (12), zum Beispiel eines Containers (14) oder einer Palette (13), der/die auf den bzw. vom Anhänger (1) geladen bzw. entladen werden kann, von einem oder auf einen Lastkraftwagen (23) mit einem Arm (43) zum Ergreifen und Behandeln der Ladung, Anhänger (1) mit einem Fahrgestell (2) gemäß der Straßenverkehrsordnung und mit mindestens einem, vorzugsweise zwei Längsträgern (3), die sich in Längsrichtung über die gesamte Länge des Anhängers (1) erstrecken, **dadurch gekennzeichnet, dass** er mit einem beweglichen Verfahrjoch ausgerüstet ist (31), das quer auf den Anhänger (1) gelegt ist, zur Auflage des hinteren Endes (53) des Transportguts (12) und um sich in beide Richtungen entlang der Längsträger (3) dieses Anhängers (1) zu verschieben, unter der Einwirkung des Bedienungsarmes (43) des Lastkraftwagens (23) auf das Transportgut (12), **sowie**
**dadurch dass :**
- der oder die Längsträger (3) und das Oberteil des Anhängers (1) sowie das Unterteil des beweglichen Verfahrjochs (31) derart gestaltet und untereinander angeordnet sind, dass, wenn das bewegliche Verfahrjoch (31) sich in dem Teil vor (11) dem Anhänger befindet (1), ein Spiel (68) entsteht, das eine seitliche und/oder winkelförmige Verschiebung zur Anpassung des beweglichen Verfahrjochs (31) an die Längsachse des Anhängers (1) gestattet, um eine Ausrichtungsabweichung zwischen dem Lastkraftwagen (23) und dem Anhänger (1) beim Verfahren kompensieren zu können,
**sowie dadurch dass :**
- dieses Spiel (68) allmählich abnimmt, wenn das bewegliche Verfahrjoch (31) sich zum hinteren Teil des Anhängers (1) hin verschiebt, und so eine seitliche und Winkel-Neuzentrierung des beweglichen Verfahrjochs (31) im Vergleich zu der Längsachse des Anhängers (1) bewirkt.

2. Transportanhänger nach dem vorhergehenden Anspruch, **dadurch gekennzeichnet, dass** seine Längsträger (3) im hinteren Teil (5) des Anhängers (1) zusammenlaufen, um untereinander eine Zentrierungskonvergenz (6) abzugrenzen.

3. Transportanhänger nach einem beliebigen der vorhergehenden Ansprüche, **dadurch gekennzeichnet, dass** die Längsträger nicht (3) über ihre gesamte Länge waagrecht sind, sondern im hinteren Teil (5) des Anhängers (1) absinken, so dass ein Höhenunterschied zwischen ihrem Vorderende (7) und ihrem Hinterende (8) entsteht.

4. Transportanhänger nach einem beliebigen der vorhergehenden Ansprüche **dadurch gekennzeichnet, dass** die Längsträger (3) in dem Vorderteil (11) des Anhängers (1) durch eine feste Vorderteiltraverse (10) verbunden sind, die sich quer zum Anhänger (1) erstreckt und die vordere Grenze der möglichen Längsverschiebung des beweglichen Verfahrjochs (31) bildet.

5. Transportanhänger nach einem beliebigen der vorhergehenden Ansprüche **dadurch gekennzeichnet, dass** er außerdem Verfahrbahnen (24) in Längsrichtung auf jeder Seite des Anhängers (1) umfasst.

6. Transportanhänger nach dem vorhergehenden Anspruch, **dadurch gekennzeichnet, dass** die Längs-Verfahrbahnen (24) die Außenseite der Längsträger (3) des Anhängers (1) einfassen und dabei parallel zu deren oberer Wand (4) bleiben.

7. Transportanhänger nach einem beliebigen der vorhergehenden Ansprüche **dadurch gekennzeichnet, dass** er außerdem in seinem Vorderteil (11) eine im wesentlichen waagrechte ebene Oberfläche (26) umfasst, zwischen den Längsträgern (3), und zwar niedriger als ihre obere Wand (4), so dass sie bei der Ausrichtungskorrektur mithelfen können.

8. Transportanhänger nach dem vorhergehenden Anspruch, **dadurch gekennzeichnet, dass** die ebene Oberfläche (26) mit einer aufsteigenden Rampe (27) beginnt.

9. Transportanhänger nach einem beliebigen der vorhergehenden Ansprüche **dadurch gekennzeichnet, dass** das bewegliche Verfahrjoch (31) mindestens eine Ladeschnittstelle (52) umfasst, die auf dem Oberteil dieses beweglichen Verfahrjochs (31) gelegen ist und die mit komplementären Mitteln (15, 60) zusammenarbeitet, die von dem Transportgut (12) getragen werden oder letzteres ausstatten.

10. Transportanhänger nach dem vorhergehenden Anspruch, **dadurch gekennzeichnet, dass** die mindestens eine Ladeschnittstelle mindestens eine Ladeebene (59) umfasst, die sich auf die Oberseite des Querträgers (31) erstreckt und geeignet ist, das hintere Ende (60) mindestens eines der standardisierten Längsträger (57) einer Palette (13) zu empfangen.

11. Transportanhänger nach dem vorhergehenden Anspruch, **dadurch gekennzeichnet, dass** er außerdem Lastzentriervorrichtungen (61) in Form von zwei Längsstangen (62) umfasst, von denen jede ein spitzes Ende aufweist (63), das in den standardisierten Tunnel (58) der Palette (13) eindringt.

12. Transportanhänger nach Anspruch 5 **dadurch gekennzeichnet, dass** das bewegliche Verfahrjoch (31) Verschiebungsmittel (44) umfasst, die geeignet sind, das bewegliche Verfahrjoch (31) und die Last (12) unter Aufstützung auf letztere zu tragen, so dass das Verfahrjoch (31) sich auf den Längs-Verfahrbahnen (24) des Anhängers (1) verschieben kann.

13. Transportanhänger nach einem beliebigen der Ansprüche 9 bis 11 **dadurch gekennzeichnet, dass** das bewegliche Verfahrjoch (31) ein Hebemittel (34) umfasst, wodurch es möglich wird, die Höhe der Lastschnittstelle (52) im Verhältnis zu der Ebene der oberen Wand (4) der Längsträger (3) des Anhängers (1) zu verändern.

14. Transportanhänger nach dem vorhergehenden Anspruch, **dadurch gekennzeichnet, dass** das bewegliche Verfahrjoch (31) aus einem hohen Querträger (32) und einem niedrigen Querträger (33) besteht, die einander im Betrieb überlagern ; das Hebemittel (34) ist zwischen sie gelegt.

15. Transportanhänger nach einem beliebigen der vorhergehenden Ansprüche **dadurch gekennzeichnet, dass** das bewegliche Verfahrjoch (31) an seiner Unterseite nach unten offene Führungstunnel (49) aufweist, wodurch es möglich wird, es entlang der Längsträger (3) des Anhängers (1) zu führen.

16. Transportanhänger nach einem beliebigen der vorhergehenden Ansprüche **dadurch gekennzeichnet, dass** das bewegliche Verfahrjoch (31) auf jeder Seite mindestens einen Aufnahmehohlraum (50) zur Aufnahme der Rollen umfasst, mit denen das hintere Ende (53) des Transportguts (12) ausgestattet sein kann.

17. Transportanhänger nach einem beliebigen der vorhergehenden Ansprüche **dadurch gekennzeichnet, dass** das bewegliche Verfahrjoch (31) ein Blockierungsmittel (66) umfasst, um mit einer komplementären Verriegelungsvorrichtung zusammenzuwirken, die an einem geeigneten Ort im Anhänger (1) gelegen ist.

18. Transportanhänger nach dem vorhergehenden Anspruch, **dadurch gekennzeichnet, dass** das Blockierungsmittel (66) zwei Verriegelungsfinger (67) umfasst, die sich hinter das bewegliche Verfahrjoch (31) erstrecken.

19. Transportanhänger nach einem beliebigen der vorhergehenden Ansprüche **dadurch gekennzeichnet, dass** das bewegliche Verfahrjoch (31) außerdem ein Hilfsmittel zur Regulierung (73) umfasst.

20. Transportanhänger nach dem vorhergehenden Anspruch, **dadurch gekennzeichnet, dass** das Hilfsmittel zur Regulierung (73) eine Reihe von Kugeln (74) umfasst, die in freier Bewegung auf sich selbst und in eine Aufnahme (75) eindringend montiert sind.

21. Transportanhänger nach einem beliebigen der vorhergehenden Ansprüche **dadurch gekennzeichnet, dass** er außerdem in seinem hinteren Teil (5) einen hinteren Anschlagquerträger (85) umfasst, der sich quer zum Anhänger (1) erstreckt und die hintere Grenze der möglichen Längsverschiebung des beweglichen Verfahrjochs (31) bildet.

22. Transportanhänger nach dem vorhergehenden Anspruch, **dadurch gekennzeichnet, dass** der hintere Anschlagquerträger (85) in Längsrichtung beweglich entlang der Längsträger (3) des Anhängers (1) montiert ist und eine Verriegelungsvorrichtung (91) umfasst, wodurch es möglich wird, den hinteren Anschlagquerträger (85) zu immobilisieren, sobald die passende Position erreicht ist.

23. Transportanhänger nach den Ansprüchen 5 und 22, **dadurch gekennzeichnet, dass** der hintere Anschlagquerträger (85) Verschiebemittel (89) umfasst, die mit den Längs-Verfahrbahnen (24) des Anhängers (1) zusammenwirken.

24. Transportanhänger nach Anspruch 22, **dadurch gekennzeichnet, dass** die Verriegelungsvorrichtung (91) ein System von zapfen (92) ist, die mit einer Reihe von ausgerichteten hohlen Sitzen (93) im Fahrgestell (2) des Anhängers (1) zusammenwirken.

25. Transportanhänger nach Anspruch 22, **dadurch gekennzeichnet, dass** die Verriegelungsvorrichtung (91) ein Zahnlineal (94) umfasst oder eines mit linearer Verzahnung mit kleinen Schritten, in einer Aushöhlung von welchem ein zurückziehbares komplementäres Element (95), geführt durch den Querträger (85), das von dessen Unterseite auftaucht, in einer gegebenen Position auf dem Lineal fest eingreift.

26. Transportanhänger nach Anspruch 22, **dadurch gekennzeichnet, dass** die Verschiebung des hinteren Anschlagquerträgers (85), nur in Richtung der Bewegung nach vorn, mit der Verschiebung des beweglichen Verfahrjochs (31) baulich verbunden ist.

27. Transportanhänger nach Anspruch 17 und einem beliebigen der Patentansprüche 21 bis 26, **dadurch gekennzeichnet, dass** der hintere Anschlagquerträger (85) eine Verriegelungsvorrichtung umfasst, die mit dem Blockierungsmittel (66) zusammenwirkt, das von dem beweglichen Verfahrjoch (31) getragen wird, wodurch es möglich wird, dieses bewegliche Verfahrjoch (31) in Hinblick auf den Transport des Anhängers (1) zu immobilisieren.

28. Transportanhänger nach Anspruch 18 und dem vorhergehenden Anspruch, **dadurch gekennzeichnet, dass** der hintere Anschlagquerträger (85) Verriegelungshülsen (96) umfasst, in die die Verriegelungsfinger (67) eingreifen, die sich hinter dem beweglichen Verfahrjoch (31) erstrecken können, um dieses bewegliche Verfahrjoch (31) in Hinblick auf den Transport des Anhängers (1) zu immobilisieren.

29. Transportanhänger nach dem vorhergehenden Anspruch, **dadurch gekennzeichnet, dass** der hintere Anschlagquerträger (85) Vorsprünge (97) umfasst, die sich oberhalb der Verriegelungsbehälter (96) erheben.

30. Transportanhänger nach einem beliebigen der vorhergehenden Ansprüche, **dadurch gekennzeichnet, dass** er außerdem Sicherheits- und Festhalteelemente (76) umfasst, die mit komplementären Mitteln zusammenwirken, die das Transportgut (12) ausstatten oder von letzterem getragen werden und die es gestatten, das Transportgut (12) zu immobilisieren und blockieren, wenn es auf den Anhänger (1) geladen worden ist.

31. Transportanhänger nach dem vorhergehenden Anspruch, **dadurch gekennzeichnet, dass** die Sicherheits- und Festhalteelemente (76) Eckriegel (17) sind, die geeignet sind, mit den Eckstücken (15) zusammenwirken, die sich an den unteren Ecken von bestimmten Ladungen (12) befinden.

32. Transportanhänger nach dem vorhergehenden Anspruch, **dadurch gekennzeichnet, dass** der mindestens eine dieser Eckriegel (17) auf einen rotierenden Block (54) montiert oder in diesen integriert ist.

33. Transportanhänger nach Anspruch 31 oder 32 **dadurch gekennzeichnet, dass** der mindestens eine dieser Eckriegel (17) einen nach oben abstehenden Zentrierungsfinger (19) umfasst, dessen zwei gegenüberliegende Endseiten (20) schräg sind.

34. Transportanhänger nach einem beliebigen der Ansprüche 31 bis 33, **dadurch gekennzeichnet, dass** der mindestens eine dieser Eckriegel (17) einen Zentrierungskeil (55) in Form einer im wesentlichen senkrechten Wand umfasst, deren Oberteil (56) in Richtung des Riegels (17), nach hinten oder zur Außenseite des Riegels (17) hin geneigt ist.

35. Transportanhänger nach Anspruch 30, **dadurch gekennzeichnet, dass** die Sicherheits- und Festhalteelemente (76) Verriegelungszwischenorgane (77) sind, die mit den standardisierten Verriegelungsfingern zusammenwirken, die DIN-Finger genannt werden und mit denen bestimmte Ladungen (12) ausgestattet sind.

36. Transportanhänger nach dem vorhergehenden Anspruch, **dadurch gekennzeichnet, dass** die Verriegelungszwischenorgane (77) jeweils von einem rotierenden Auge (78) gebildet sind, um aus einer eingezogenen Ruheposition, in der das bewegliche Verfahrjoch (31) frei durchgeht, in eine ausgefahrene Verriegelungsposition übergehen zu können, in der es den entsprechenden DIN-Finger umgibt.

37. Transportanhänger nach einem beliebigen der vorhergehenden Ansprüche, **dadurch gekennzeichnet, dass** er außerdem mindestens zwei versenkbare Zentriervorrichtungen (103) umfasst, die im wesentlichen einander gegenüber auf beiden Seiten der Ladeebene des Anhängers (1) liegen und die geeignet sind, aus einer eingezogener Position, in der sie das bewegliche Verfahrjoch (31) frei durchgehen lassen, in eine aufgerichtete Position überzugehen, in der sie eine Neuzentrierung der Paletten (13) während ihrer Beladung gestatten, dann üben sie eine seitliche Blockierung von diesen während des Transports aus.

38. Transportanhänger nach dem vorhergehenden Anspruch, **dadurch gekennzeichnet, dass** die versenkbaren Zentriervorrichtungen (103) jede eine Innenwand (104) aufweisen, deren Oberteil (105) nach innen abgeschrägt ist und das durch Gleitenkontakt mit der Außenseite der Längsträger (57) einer Palette (13) zusammenwirkt.

39. Transportanhänger nach Anspruch 37 oder 38 **dadurch gekennzeichnet, dass** in eingezogener Position die Seitenwand (107) der versenkbaren Zentriervorrichtungen (103), die dann nach oben gedreht ist, auf Höhe der entsprechenden Verfahrbahn (24) zutagetritt.

40. Transportanhänger nach einem beliebigen der Patentansprüche 37 bis 39, **dadurch gekennzeichnet, dass** das Kippen der versenkbaren Zentriervorrichtungen (103) in eingezogener Position automatisch durch die Verschiebung des beweglichen Verfahrjochs (31) bewirkt wird.

41. Transportanhänger nach einem beliebigen der Patentansprüche 37 bis 40, **dadurch gekennzeichnet, dass** jede versenkbare Zentriervorrichtung (103) mit einer Zugfeder (108) verbunden ist, die in aufgerichteter Position darauf eine Rückstellkraft ausübt.

42. Transportanhänger nach einem beliebigen der Patentansprüche 37 bis 41, **dadurch gekennzeichnet, dass** die versenkbaren Zentriervorrichtungen (103) manuell in eingezogener Position mittels eines Bedienungshebels (109) plaziert werden können, dann in dieser Position mit Hilfe eines Blockierungsmechanismus (110) beibehalten werden.

43. Transportanhänger nach dem vorhergehenden Anspruch, **dadurch gekennzeichnet, dass** die versenkbaren Zentriervorrichtungen (103), die in eingezogener Position plaziert sind, durch den Bedienungshebel (109) automatisch durch einen Selbstblockier-Mechanismus in dieser Position gehalten werden.

44. Transportanhänger nach Anspruch 17 und einem beliebigen der Patentansprüche 37 bis 43, **dadurch gekennzeichnet, dass** die versenkbaren Zentriervorrichtungen (103) eine Verriegelungsvorrichtung enthalten, die mit dem Blockierungsmittel (66) zusammenwirkt, getragen von dem beweglichen Verfahrjoch (31), wodurch es möglich wird, dieses bewegliche Verfahrjoch (31) bei einer Bewegung des Anhängers (1) im Leerzustand zu immobilisieren.

45. Transportanhänger nach Anspruch 18 und dem vorhergehenden Anspruch, **dadurch gekennzeichnet, dass** die versenkbaren Zentriervorrichtungen (103) an ihrer Seitenwand (111) einen Vorsprung (112) enthalten, der einen Haken (113) bildet, um mit den Verriegelungsfingern (67) zusammenzuwirken, die sich hinter dem beweglichen Verfahrjoch erstrecken (31), um dieses bewegliche Verfahrjoch (31) bei einer Bewegung im Leerzustand des Anhängers (1) zu immobilisieren.

46. Transportanhänger nach einem beliebigen der vorhergehenden Ansprüche **dadurch gekennzeichnet, dass** er außerdem einen vorderen Anschlag (22) umfasst, der vom Anhänger (1) nach vorn ragt und dessen Länge kalkuliert ist, um den optimalen Abstand zwischen dem Lastkraftwagen (23) und dem Anhänger (1) zu bilden, um einen Transport der Last (12) unter guten Bedingungen durchzuführen.

47. Verfahren zum Laden einer Last, vor allem von Straßentransportgütern (12), zum Beispiel ein Container (14) oder eine Palette (13), auf einen Transportanhänger (1) nach einem beliebigen der vorhergehenden Ansprüche, von einer Lastkraftwagen (23) mit einem Arm (43) zum Ergreifen und Behandeln der Ladungen, wobei der Anhänger (1) mit Sicherheits-und Festhalteelementen (76) ausgestattet ist, wodurch es möglich wird, die Last (12) auf dem Anhänger zu immobilisieren, sowie mit dem beweglichen Verfahrjoch (31), das quer auf der Oberseite des Anhängers (1) liegt, zur Auflage des hinteren Endes (53) des Transportguts (12) mittels einer Ladeschnittstelle (52) und um sich entlang der Längsträger (3) des Anhängers (1) unter der Einwirkung des Bedienungsarmes (43) des Lastkraftwagens (23) auf das Transportgut (12) zwischen einer festen Vorderteiltraverse (10) und einem hinteren Anschlagquerträger (85) zu bewegen, wobei das Verfahren die folgenden Schritte umfasst:
- man immobilisiert den Anhänger (1) durch seine Bremsen und man senkt seine Deichsel;
- man richtet den Lastkraftwagen (23) im wesentlichen in der Verlängerung des Anhängers (1) aus und man fährt den Lastkraftwagen rückwärts, bis zu einer geeigneten Entfernung zum Laden der Last (12) auf den Lastkraftwagen (23) mit Hilfe des Greifarms (43) unter Benutzung, eventuell, des vorderen Anschlags (22) des Anhängers (1) als Orientierungspunkt, wenn er damit ausgestattet ist;
- man regelt die Position des hinteren Anschlagquerträgers (85) je nach der Länge der Last (12);
- man bewegt, falls nötig, die Last (12) rückwärts mit Hilfe des Bedienungsarmes (43) des Lastkraftwagens (23);
- man passt die Seiten- und Eckposition und eventuell die Höhe des beweglichen Verfahrjochs (31) an das hintere Ende (53) der Last (12) an;
- man plaziert das hintere Ende (53) der Last (12) auf dem beweglichen Verfahrjoch (31) unter Benutzung der Lastschnittstelle (52) von letzterem;
- man verriegelt Drehverschlüsse (17) in den Eckunterstücken (15) eines ISO-Containers;
- man verschiebt die Last (12) unter Aufstützung auf das bewegliche Verfahrjoch (31) zum hinteren Teil (5) des Anhängers (1) mittels des Bedienungsarmes (43) des Lastkraftwagens (23) bis zum Zurückziehen der Zentriervorrichtungen und bis zum Anschlagkontakt des beweglichen Verfahrjochs (31) gegen den hinteren Anschlagquerträger (85), was während der Verschiebung eine Neuzentrierung des beweglichen Verfahrjochs (31) im Vergleich zu der Längsachse des Anhängers (1) bewirkt;
- man verriegelt das bewegliche Verfahrjoch (31) hinter dem Anhänger (1);
- man verriegelt die Last (12) auf dem Anhänger mittels der Sicherheits- und Festhalteelemente (76).

48. Verfahren nach dem vorhergehenden Anspruch, **dadurch gekennzeichnet, dass** versenkbare Zentriervorrichtungen (103) sich aufrichten, nachdem das bewegliche Verfahrjoch (31) bei seiner Bewegung zum hinteren Anschlagquerträger (85) an ihnen vorbeigegangen ist.
